# EUROPEAN PATENT APPLICATION

(11) **EP 4 832 551 A1**
(43) Date of publication of application: **28.10.2026**
(21) Application number: 24916722.2
(22) Date of filing: 23.12.2024
(51) Int. Cl.: H04W 24/02

(54) **NETWORK DATA ANALYSIS METHOD AND COMMUNICATION APPARATUS**

(30) Priority: 12.01.2024 CN 202410057768
(71) Applicant: Huawei Technologies Co., Ltd., Shenzhen, Guangdong 518129 (CN)
(72) Inventor: LI, Zhuoming, Shenzhen, Guangdong 518129 (CN)
(74) Representative: Huawei European IPR
(86) International application number: PCT/CN2024/141646
(87) International publication number: WO 2025/148675

(57) **Abstract**

This application provides a network data analysis method and a communication apparatus, where the method is applied to a recommendation service function. The method includes: receiving first information from a first network element, where the first information includes a first request and indication information, the first request is used to request recommended data, the indication information indicates to collect first data, and the first data is network data associated with the recommended data and determined by the first network element; obtaining a predictive analysis result, where the predictive analysis result is obtained based on the first data; determining the recommended data based on the predictive analysis result; and sending the recommended data to the first network element. According to this application, a globally optimized data recommendation service can be provided without the need to understand service logic of each network element, thereby helping improve the adaptability and flexibility of the data recommendation service.

## Description

This application claims priority to Chinese Patent Application No. 202410057768.6, filed with the China National Intellectual Property Administration on January 12, 2024 and entitled "NETWORK DATA ANALYSIS METHOD AND COMMUNICATION APPARATUS", which is incorporated herein by reference in its entirety.

### TECHNICAL FIELD

This application relates to the field of communication technologies, and in particular, to a network data analysis method and a communication apparatus.

### BACKGROUND

Network data analysis is a service that collects relevant network data from network function network elements, application function network elements, or network management systems. It leverages machine learning techniques to perform correlation analysis on collected data across various dimensions, train and fit models, and provide data outputs based on the models. A network element that provides network data analysis may be a network data analytics function (network data analytics function, NWDAF) network element, a management data analytics function (management data analytics function, MDAF) network element, or the like. Using the NWDAF as an example, other network function (network function, NF) network elements in the network consume data analysis services provided by the NWDAF and adjust network operations based on the output of the NWDAF.

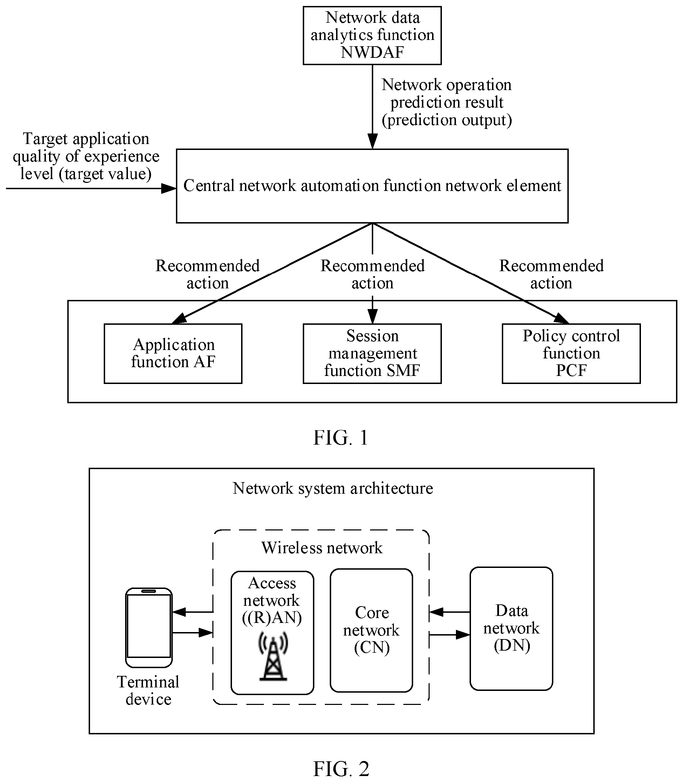

As shown in FIG. 1, a central network automation function network element may obtain a quality of experience level (that is, a target value) expected to be achieved for target application in a specified location area and a network operation prediction result (that is, a prediction output, for example, an experience analysis prediction result, a user plane congestion prediction result, or a user plane function (user plane function, UPF) load prediction result) output by the NWDAF, to determine recommended actions (for example, a recommended UPF network element selection, a recommended control policy for a terminal, and a recommended service packet sending parameter for an application) to be taken by each network element in the specified location area. Factors affecting quality of service experience are controlled by a plurality of network elements such as a policy control function (policy control function, PCF), a session management function (session management function, SMF), and an application function (application function, AF). These network elements all perform network adjustment based on recommended actions determined by the central network automation function network element, thereby enabling coordinated operation among the plurality of network elements to implement network automation.

However, when determining recommended actions for respective network elements, the central network automation function network element generally needs to rely on knowledge graphs of the network elements or perform in-depth analysis of processing logical relationships among the network elements in the network, in order to output appropriate recommended actions. Therefore, it is inevitable to understand service logic of each network element, and it is also necessary to develop different recommendation service functions based on different service logic for different service scenarios. Such an approach not only increases workloads, but also reduces the adaptability and flexibility of recommendation services.

### SUMMARY

Embodiments of this application provide a network data analysis method and a communication apparatus. Based on the method described in this application, a globally optimized data recommendation service can be provided without the need to understand service logic of each network element, thereby helping improve the adaptability and flexibility of the data recommendation service.

According to a first aspect, this application provides a network data analysis method, where the method is applied to a recommendation service function. The method includes: receiving first information from a first network element, where the first information includes a first request and indication information, the first request is used to request recommended data, the indication information indicates to collect first data, and the first data is network data associated with the recommended data and determined by the first network element; obtaining a predictive analysis result, where the predictive analysis result is obtained based on the first data; determining the recommended data based on the predictive analysis result; and sending the recommended data to the first network element.

Based on the method described in the first aspect, because the first data specified to be collected is determined by the first network element (for example, the first network element may determine, based on service processing logic, the first data that needs to be collected), the predictive analysis result determined based on the first data can feed back impact of network adjustment behavior on a network. In addition, the association relationship between the first data and the recommended data may also be determined by the first network element based on the service processing logic. Therefore, an operating process performed by the recommendation service function after the recommendation service function receives the first information is driven by data, so that a globally optimized data recommendation service can be provided without the need to understand service logic of each network element, thereby reducing workloads and helping improve adaptability and flexibility of the data recommendation service.

In a possible implementation, the indication information further indicates a data source of the first data. Based on this manner, the source of the first data can be determined. The data source of the first data indicates to collect the first data from one or more specified network elements. The first network element may determine, as the source of the first data based on service processing logic, one or more network elements that can best reflect impact of network adjustment behavior on a network, to improve data collection efficiency in a case in which the recommendation service function does not need to understand service logic of each network element, thus reducing workloads and improving adaptability and flexibility of a data recommendation service.

In a possible implementation, the first information further includes an analysis type identifier; or the method further includes: determining the analysis type identifier based on a target parameter and the first request. This manner helps improve flexibility of determining the analysis type identifier.

In a possible implementation, the analysis type identifier indicates any one of the following types: service experience analysis, user plane congestion analysis, or network element load analysis.

In a possible implementation, the target parameter includes any one of the following parameters: quality of experience, a user plane congestion level, and load levels of a plurality of UPFs.

In a possible implementation, obtaining the predictive analysis result includes: collecting the first data and second data corresponding to the analysis type identifier, where the first data belongs to the second data, or the first data does not belong to the second data; and determining the predictive analysis result based on the first data and the second data. This manner helps improve accuracy of the predictive analysis result and improves efficiency of a recommendation service.

In a possible implementation, determining the predictive analysis result based on the first data and the second data includes: increasing, based on the indication information, a weight of the first data relative to data in the second data other than the first data, or increasing, based on the indication information, a weight of the first data relative to the second data; and determining the predictive analysis result based on the weight of the first data, a weight of the second data, the first data, and the second data. It may be understood as that, when the first data belongs to the second data, during obtaining of the predictive analysis result, the recommendation service function may increase, based on an indication of collecting the first data, the weight of the first data relative to the data in the second data other than the first data, so that the predictive analysis result can more accurately reflect impact of network adjustment behavior on a network; or when the first data does not belong to the second data, the recommendation service function needs to obtain the predictive analysis result based on both the first data and the second data, that is, may increase, based on an indication of collecting the first data, the weight of the first data relative to the second data, so that the predictive analysis result can reflect impact of network adjustment behavior on a network. This manner helps improve accuracy of the predictive analysis result and further improves efficiency of a recommendation service.

In a possible implementation, obtaining the predictive analysis result includes: sending a second request to a predictive analytics function, where the second request is used to request the predictive analysis result, and the second request includes the analysis type identifier and the indication information; and receiving the predictive analysis result from the predictive analytics function. The indication information indicates to collect the first data. Optionally, the indication information is further used to indicate a data source of the first data. When the first data belongs to the second data corresponding to the analysis type identifier, the predictive analytics function may increase, based on an indication of collecting the first data, the weight of the first data relative to the data in the second data other than the first data, so that the predictive analysis result can more accurately reflect impact of network adjustment behavior on a network. When the first data does not belong to the second data, the predictive analysis result needs to be obtained based on the first data in addition to the second data to be collected. The weight of the first data relative to the second data may be increased based on an indication of collecting the first data, so that the predictive analysis result can reflect impact of network adjustment behavior on a network. When the indication information further includes the data source of the first data, the predictive analytics function collects the first data from one or more network elements specified by the data source. Based on this manner, the predictive analysis result can reflect the impact of the network adjustment behavior on the network, to help improve accuracy of the predictive analysis result and further improve efficiency of a recommendation service.

In a possible implementation, the method further includes: determining analysis filtering information based on the first request, where the analysis filtering information indicates a network range corresponding to the predictive analysis result. Specifically, the analysis filtering information is determined based on the indication information, in the first request, for collecting the first data; or the analysis filtering information is determined based on the data source, in the first request, of the first data. The second request further includes the analysis filtering information. Based on this manner, prediction analysis efficiency can be improved.

In a possible implementation, the analysis type identifier indicates service experience analysis; the first network element includes an application function AF, a policy control function PCF, and a session management function SMF; and the first data includes a peak rate and an average rate of a first application at a current time and/or a historical time. Based on this manner, QoE of the application can be improved.

In a possible implementation, when the first network element is the AF, the recommended data includes a recommended server instance of the first application.

In a possible implementation, when the first network element is the PCF, the recommended data includes a recommended peak rate and a recommended average rate of the first application.

In a possible implementation, when the first network element is the SMF, the recommended data includes a recommended data network access identifier of the first application.

In a possible implementation, the analysis type identifier indicates user plane congestion analysis, and the first request includes an identifier of a second application; and the first network element includes a PCF, the first data includes a user plane congestion level of the second application at a current time and/or a historical time, and the recommended data includes a recommended peak throughput and/or a recommended average throughput of the second application. Based on this manner, a QoS parameter can be adjusted to avoid user plane congestion.

In a possible implementation, the analysis type identifier indicates network element load analysis, and the first network element includes at least one SMF; and the first data includes a quantity of N4 interface sessions established by the at least one SMF on a plurality of UPFs at a current time and/or a historical time; and the recommended data includes a quantity of N4 interface sessions recommended to be established by the at least one SMF on the plurality of UPFs. Based on this manner, selection and distribution proportions for UPFs can be determined, to prevent UPF load imbalance or overload.

In a possible implementation, the first information further includes an expected value of the target parameter.

In a possible implementation, determining the recommended data based on the predictive analysis result includes: determining a deviation value based on the predictive analysis result and the expected value of the target parameter; adjusting a model parameter of a first data optimizer in a direction to reduce the deviation value, to obtain a second data optimizer; and determining the recommended data by using the second data optimizer. Based on this manner, accuracy of the recommended data can be improved.

According to a second aspect, this application provides a network data analysis method, where the method is applied to a predictive analytics function. The method includes: receiving a second request from a recommendation service function, where the second request is used to request a predictive analysis result, the second request includes an analysis type identifier and indication information, the indication information indicates to collect first data, and the first data is network data determined by a first network element and associated with recommended data output by the recommendation service function; collecting the first data and second data corresponding to the analysis type identifier, where the first data belongs to the second data, or the first data does not belong to the second data; determining the predictive analysis result based on the first data and the second data; and sending the predictive analysis result to the recommendation service function.

For beneficial effects of possible implementations of the second aspect, refer to the beneficial effects of the possible implementations of the first aspect. Details are not described herein again.

In a possible implementation, the indication information further indicates a data source of the first data; and collecting the first data includes: collecting the first data from the data source. The data source may be one or more network elements.

In a possible implementation, determining the predictive analysis result based on the first data and the second data includes: increasing, based on the indication information, a weight of the first data relative to data in the second data other than the first data, or increasing, based on the indication information, a weight of the first data relative to the second data; and determining the predictive analysis result based on the weight of the first data, a weight of the second data, the first data, and the second data. It may be understood as that, when the first data belongs to the second data, during obtaining of the predictive analysis result, the predictive analytics function may increase, based on an indication of collecting the first data, the weight of the first data relative to the data in the second data other than the first data, so that the predictive analysis result can more accurately reflect impact of network adjustment behavior on a network; or when the first data does not belong to the second data, the predictive analytics function needs to obtain the predictive analysis result based on both the first data and the second data, that is, increase, based on an indication of collecting the first data, the weight of the first data relative to the second data, so that the predictive analysis result can reflect impact of network adjustment behavior on a network.

In a possible implementation, the analysis type identifier indicates service experience analysis. The first network element includes an AF, a PCF, and an SMF. The first data includes a peak rate and an average rate of a first application at a current time and/or a historical time, and the first data is collected through a UPF. The second data includes second information collected from the AF and third information collected from the UPF and/or the SMF. The second information includes quality of experience of the first application, a server instance of the first application, and an identifier of the first application at a current time and/or a historical time. The third information includes a data network access identifier, a user data rate, a user packet delay, and a quality of service flow identifier corresponding to an application packet that are of the first application at the current time and/or the historical time.

In a possible implementation, the second request further includes analysis filtering information, where the analysis filtering information indicates a network range corresponding to the analysis prediction result.

In a possible implementation, the analysis type identifier indicates user plane congestion analysis. The first network element includes a PCF. The first data includes a user plane congestion level of a second application at a current time and/or a historical time, and the first data is collected through a UPF. The second data includes fourth information collected from the UPF and/or an SMF. The fourth information includes a peak throughput of the second application, an average throughput of the second application, an identifier of the second application, and location information of a terminal device at the current time and/or the historical time.

In a possible implementation, the analysis type identifier is network element load analysis, and the first network element includes at least one SMF. The first data includes a quantity of N4 interface sessions established by the at least one SMF on a plurality of UPFs at a current time and/or a historical time, and the first data is collected through the plurality of UPFs. The second data includes fifth information collected from the plurality of UPFs. The fifth information includes load level data of the plurality of UPFs at the current time and/or the historical time.

According to a third aspect, this application provides a network data analysis method, where the method is applied to a first network element. The method includes: sending first information to a recommendation service function, where the first information includes a first request and indication information, the first request is used to request recommended data, the indication information indicates to collect first data, and the first data is network data associated with the recommended data and determined by the first network element; receiving the recommended data from the recommendation service function; and determining a first parameter based on the recommended data.

For beneficial effects of possible implementations of the third aspect, refer to the beneficial effects of the possible implementations of the first aspect. Details are not described herein again.

In a possible implementation, the method further includes: determining, based on service processing logic of the first network element, that the first data is associated with the recommended data.

In a possible implementation, the first data is a network operation indicator affected by the first parameter.

In a possible implementation, the first information further includes an analysis type identifier. Optionally, the analysis type identifier indicates any one of the following types: service experience analysis, user plane congestion analysis, or network element load analysis.

In a possible implementation, the method further includes: determining the analysis type identifier based on the service processing logic of the first network element; and determining the first request and the indication information based on the analysis type identifier.

In a possible implementation, the analysis type identifier indicates service experience analysis; the first network element includes an AF, a PCF, and an SMF; and the first data includes a peak rate and an average rate of a first application at a current time and/or a historical time.

In a possible implementation, when the first network element is the AF, the recommended data is a recommended server instance of the first application, and the first parameter is a server instance selected by the first application.

In a possible implementation, when the first network element is the PCF, the recommended data includes a recommended peak rate and a recommended average rate of the first application. The first parameter includes a maximum flow bit rate or an aggregate maximum rate, and the first parameter further includes a guaranteed bit rate. Determining the first parameter based on the recommended data includes: determining the maximum flow bit rate or the aggregate maximum rate based on the recommended peak rate of the first application, and determining the guaranteed bit rate based on the recommended average rate of the first application.

In a possible implementation, when the first network element is the SMF, the recommended data is a recommended data network access identifier of the first application, and the first parameter is a user plane path selected by the first application.

In a possible implementation, the analysis type identifier indicates the user plane congestion analysis, and the first request includes an identifier of a second application; and the first network element includes a PCF, the first parameter is a session quality of service parameter, the first data includes a user plane congestion level of the second application at a current time and/or a historical time, and the recommended data includes a recommended peak throughput and/or a recommended average throughput of the second application.

In a possible implementation, the analysis type identifier indicates the network element load analysis; the first network element includes at least one SMF; the first parameter includes selection proportions of the at least one SMF for a plurality of UPFs; the first data includes a quantity of N4 interface sessions established by the at least one SMF on the plurality of UPFs at a current time and/or a historical time; and the recommended data includes a quantity of N4 interface sessions recommended to be established by the at least one SMF on the plurality of UPFs.

In a possible implementation, the indication information further indicates a data source of the first data.

In a possible implementation, the first information further includes an expected value of a target parameter. Optionally, the target parameter includes any one of the following parameters: quality of experience, the user plane congestion level, and load levels of the plurality of UPFs.

According to a fourth aspect, this application provides a communication apparatus. The communication apparatus includes a processor. When the processor invokes a computer program in a memory, methods according to the first aspect to the third aspect are performed.

According to a fifth aspect, this application provides a communication apparatus. The communication apparatus includes a processor and a memory, and the processor is coupled to the memory. The processor is configured to implement methods according to the first aspect to the third aspect.

According to a sixth aspect, this application provides a communication apparatus. The communication apparatus includes a processor, a memory, and a transceiver, and the processor is coupled to the memory. The transceiver is configured to receive and send data, and the processor is configured to implement methods according to the first aspect to the third aspect.

According to a seventh aspect, this application provides a chip. The chip includes a processor and an interface, and the processor is coupled to the interface. The interface is configured to receive or output a signal, and the processor is configured to execute code instructions, to perform methods according to the first aspect to the third aspect.

According to an eighth aspect, this application provides a computer-readable storage medium. The storage medium stores a computer program or instructions. When the computer program or the instructions are executed by a communication apparatus, methods according to the first aspect to the third aspect are implemented.

According to a ninth aspect, this application provides a communication system. The communication system includes a recommendation service function and a first network element. The recommendation service function is configured to perform the method according to the first aspect, and the first network element is configured to perform the method according to the third aspect.

According to a tenth aspect, this application provides a communication system. The communication system includes a recommendation service function, a predictive analytics function, and a first network element. The recommendation service function is configured to perform the method according to the first aspect, the predictive analytics function is configured to perform the method according to the second aspect, and the first network element is configured to perform the method according to the third aspect.

According to an eleventh aspect, this application provides a computer program product including instructions. When a computer reads and executes the computer program product, the computer is caused to perform methods according to the first aspect to the third aspect.

### BRIEF DESCRIPTION OF DRAWINGS

FIG. 1 is a diagram of a basic architecture of a recommendation service according to an embodiment of this application;
FIG. 2 is a diagram of a network system architecture according to an embodiment of this application;
FIG. 3 is a diagram of a CU-DU architecture according to an embodiment of this application;
FIG. 4 is a diagram of a 5G network architecture according to an embodiment of this application;
FIG. 5 is a diagram of a basic architecture of a new recommendation service according to an embodiment of this application;
FIG. 6 is a schematic flowchart of a network data analysis method according to an embodiment of this application;
FIG. 7A is a schematic flowchart of obtaining a predictive analysis result by a second network element according to an embodiment of this application;
FIG. 7B is another schematic flowchart of obtaining a predictive analysis result by a second network element according to an embodiment of this application;
FIG. 7C is a schematic flowchart of determining recommended data by a second network element based on a predictive analysis result according to an embodiment of this application;
FIG. 8A and FIG. 8B are a schematic flowchart of another network data analysis method according to an embodiment of this application;
FIG. 9A is another schematic flowchart of obtaining a predictive analysis result by a second network element according to an embodiment of this application;
FIG. 9B is another schematic flowchart of obtaining a predictive analysis result by a second network element according to an embodiment of this application;
FIG. 10 is a schematic flowchart of another network data analysis method according to an embodiment of this application;
FIG. 11 is a schematic flowchart of another network data analysis method according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of a chip according to an embodiment of this application.

### DESCRIPTION OF EMBODIMENTS

Terms "first", "second", and the like in the specification, the claims, and the accompanying drawings of this application are used to distinguish between different objects but do not indicate a particular sequence. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned herein means that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one piece (item)" means one or more, "a plurality of" means two or more, "at least two pieces (items)" means two, three, or more, and "and/or" is used to describe a correspondence between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

To better understand embodiments of this application, the following first describes a system architecture in embodiments of this application.

Technical solutions in embodiments of this application may be applied to various communication systems such as a satellite communication system and a conventional mobile communication system. The satellite communication system may be integrated with the conventional mobile communication system (namely, a terrestrial communication system). The mobile communication systems include, for example, a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, and another future communication system, for example, a 6th generation (6th generation, 6G) system. The communication systems further support a communication system that integrates a plurality of wireless technologies. For example, the communication systems may be further used in a system that integrates a terrestrial mobile communication network and a non-terrestrial network (non-terrestrial network, NTN), such as an uncrewed aerial vehicle, a satellite communication system, or high altitude platform station (high altitude platform station, HAPS) communication. It may be understood that the system architecture described in embodiments of this application is intended to describe the technical solutions in embodiments of this application more clearly, and does not constitute any limitation on the technical solutions provided in embodiments of this application.

FIG. 2 is a diagram of a network system architecture according to an embodiment of this application. As shown in FIG. 2, a next-generation mobile communication network architecture formulated in the 3rd generation partnership project (3rd generation partnership project, 3GPP) standard is referred to as a 5G network architecture. A terminal device may access a wireless network, to obtain a service of an external network (for example, a data network (data network, DN)) through the wireless network, or communicate with another device through the wireless network, for example, communicate with another terminal device. The wireless network includes a (radio) access network ((radio) access network, (R)AN) and a core network (core network, CN). The (R)AN (described as a RAN below) is configured to access the terminal device to the wireless network, and the CN is configured to manage the terminal device and provide a gateway for communicating with the DN. The following separately describes in detail the terminal device, the RAN, the CN, and the DN in the network architecture in FIG. 2.

### I. Terminal device

The terminal device includes a device that provides voice and/or data connectivity for a user. For example, the terminal device is a device that has a wireless transceiver function; and may be deployed on land, where the deployment includes indoor, outdoor, handheld, wearable, or vehicle-mounted deployment, may be deployed on water (for example, on a ship), or may be deployed in the air (for example, on an airplane, a balloon, and a satellite). The terminal device may specifically be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a PDA, a handheld device having a wireless communication function, a compute device or another processing device connected to the wireless modem, a vehicle-mounted device, a communication device mounted on a high altitude aircraft, a wearable device, an uncrewed aerial vehicle, a robot, a terminal in device-to-device (device-to-device, D2D) communication, a terminal in vehicle-to-everything (vehicle-to-everything, V2X) communication, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application. The terminal may alternatively be fixed or movable. In addition, in this application, unless otherwise specified, the "terminal device" may be the terminal device itself, or may be a component of the terminal device, for example, a chip system or an SoC. The component may be installed in the terminal device. It may be understood that all or a part of functions of the terminal in this application may alternatively be implemented by using a software function running on hardware, or may be implemented by using an instantiated virtualization function on a platform (for example, a cloud platform). The terminal device in this application may be a 5G terminal, or may be a 6G terminal. This is not limited in this application.

### II. RAN

The RAN may include one or more RAN devices (or access network devices). An interface between an access network device and a terminal device may be a Uu interface (or referred to as an air interface). It is clear that in communication evolved after 5G, names of these interfaces may remain unchanged, or may be replaced with other names. This is not limited in this application.

The access network device is a node or a device that accesses the terminal device to the wireless network. The access network device includes, for example, but is not limited to, a next generation NodeB (next generation NodeB, gNB) in a 5G communication system, an evolved NodeB (evolved NodeB, eNB), a next generation evolved NodeB (next generation eNB, ng-eNB), a wireless backhaul device, a radio network controller (radio network controller, RNC), a NodeB (NodeB, NB), a home base station ((home evolved NodeB, HeNB) or (home NodeB, HNB)), a baseband unit (baseBand unit, BBU), a transmission reception point (transmission reception point, TRP), a transmitting point (transmitting point, TP), a mobile switching center, or a device that functions as a base station in device-to-device (Device-to-Device, D2D), vehicle-to-everything (vehicle-to-everything, V2X), machine-to-machine (machine-to-machine, M2M) communication; or may include a central unit (central unit, CU) and a distributed unit (distributed unit, DU) in a cloud access network (cloud radio access network, C-RAN) system, a network device that is in a non-terrestrial communication network (non-terrestrial network, NTN) communication system and that may be deployed on a high altitude platform or a satellite, or the like. This is not specifically limited in embodiments of this application. The RAN in this application may be a 5G RAN, or may be a 6G RAN. This is not limited in this application.

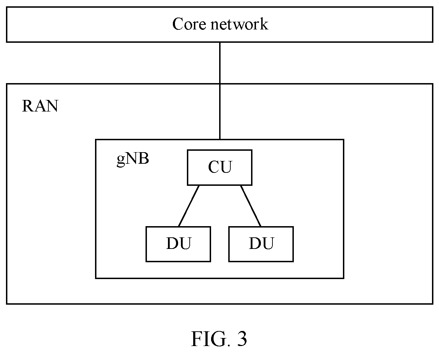

An example in which the RAN includes a gNB is used. The RAN may be connected to a core network (for example, may be an LTE core network, or may be a 5G core network). As shown in FIG. 3, a CU and a DU may be understood as division of a base station (for example, a gNB) from a perspective of logical functions. The CU and the DU may be physically separated or deployed together. A plurality of DUs may share one CU. It is clear that one DU may alternatively be connected to a plurality of CUs (not shown in FIG. 2). The CU and the DU may be connected through an interface, for example, an F1 interface. The CU and the DU may be divided based on a protocol layer of a wireless network. For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a media access control (media access control, MAC) layer, a physical (physical) layer, and the like. It may be understood that, division into processing functions of the CU and the DU based on the protocol layers is merely an example, and there may be another division manner. For example, the CU or the DU may have functions of more protocol layers through division. For example, the CU or the DU may alternatively have a part of processing functions of the protocol layers through division. In a design, a part of functions of the RLC layer and a function of a protocol layer above the RLC layer are disposed on the CU, and a remaining function of the RLC layer and a function of a protocol layer below the RLC layer are disposed on the DU. In another design, functions of the CU or the DU may alternatively be obtained through division based on a service type or another system requirement. For example, division is performed based on a delay. A function whose processing time needs to meet a delay requirement is disposed on the DU, and a function whose processing time does not need to meet the delay requirement is disposed on the CU. In another design, the CU may alternatively have one or more functions of the core network. One or more CUs may be disposed in a centralized manner or a split manner. For example, the CUs may be disposed on a network side for ease of centralized management. The DU may have a plurality of radio frequency functions, or the radio frequency functions may be disposed remotely.

### III. CN

The CN may include one or more CN devices (which may be understood as network element devices or function network elements (network functions, NFs)). The CN device is collectively referred to as a core network element below.

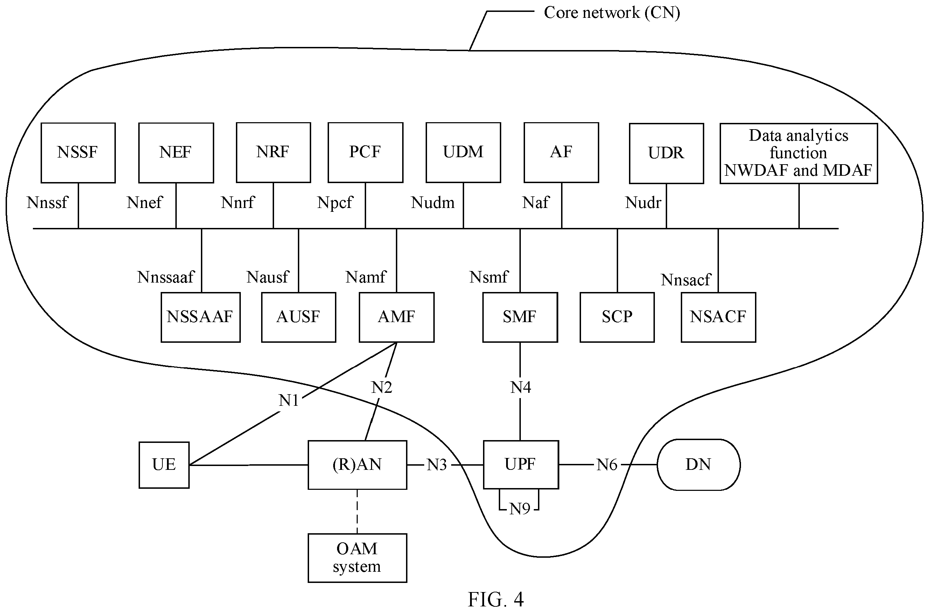

FIG. 4 is a diagram of a 5G network architecture according to this application. A CN shown in FIG. 4 includes a plurality of CN devices: a network slice selection function (network slice selection function, NSSF), a network exposure function (network exposure function, NEF), a network repository function (network function repository function, NRF), a policy control function (policy control function, PCF), unified data management (unified data management, UDM), a unified data repository (unified data repository, UDR) function, an application function (application function, AF), a network slice specific authentication and authorization function (network slice specific authentication and authorization function, NSSAAF), an authentication server function (authentication server function, AUSF), an access and mobility management function (access and mobility management function, AMF), a session management function (session management function, SMF), a user plane function (user plane function, UPF), a service communication proxy (service communication proxy, SCP), network slice admission control (Network Slice Admission Control Function, NSACF), a data analytics function (for example, a network data analytics function (network data analytics function, NWDAF) or a management data analytics function (management data analytics function, MDAF)), and the like. In addition, in FIG. 4, a terminal device (UE), an access network device (RAN), a data network (DN), and an operation, administration, and maintenance (operation, administration, and maintenance, OAM) system are further included. The access network device may mutually communicate with the OAM system.

The AF mainly interacts with a 5G core network in order to provide services, for example, to support the following functions: application influence on traffic routing, accessing network capability exposure, and interacting with a policy framework for policy control. According to an operator deployment policy, a trusted AF may directly access an internal network element function of the 5G core network to improve service processing efficiency. It is clear that a general external network element function access framework may also be used to implement information exchange with a corresponding internal network element function through the NEF.

The AMF is a control plane function provided by an operator network, and is responsible for access control and mobility management for accessing the operator network by a terminal device, for example, including functions such as mobility status management, temporary user identity assignment, and user authentication and authorization.

The SMF is a control plane function provided by the operator network, and is responsible for managing a protocol data unit (protocol data unit, PDU) session of the terminal device. The PDU session is a channel for PDU transmission, and the terminal device and the DN need to perform PDU transmission to each other through the PDU session. The SMF is responsible for establishment, maintenance, deletion, and the like of the PDU session. The SMF includes functions related to a session, for example, session management (for example, session establishment, modification, and release, including tunnel maintenance between a UPF and a RAN), selection and control of the UPF, service and session continuity (service and session continuity, SSC) mode selection, and roaming.

The PCF is a control plane function provided by an operator, including a user subscription data management function, a policy control function, a charging policy control function, quality of service (quality of service, QoS) control, and the like, and is mainly configured to provide a PDU session policy for an SMF. The policy may include a charging-related policy, a QoS-related policy, an authorization-related policy, and the like.

The UPF is a gateway provided by an operator and a gateway for communication between an operator network and a DN. The UPF includes user plane-related functions such as data packet routing and transmission, packet detection, QoS handling, uplink packet detection, and downlink data packet storage.

The UDM is mainly configured to: manage subscription data and authentication data of a user, and perform authentication credit handling, user identification handling, access authorization, registration/mobility management, subscription management, short message service management, and the like. In some embodiments, the UDM may further include a unified data repository (unified data repository, UDR). Alternatively, in some other embodiments, a 3GPP SBA in a 5G system may further include a UDR. The UDR is configured to: store and retrieve a PCF policy, store and retrieve structured data for exposure, store user information requested by an application function, and the like.

The UDR is configured to: store and retrieve subscription data, policy data, common architecture data, and the like; and is used by a UDM, a PCF, and an NEF to obtain relevant data. The UDR can provide different data access authentication mechanisms for data of different types, such as the subscription data and the policy data, to ensure data access security. For an invalid service-oriented operation or data access request, the UDR can return a failure response with an appropriate cause value.

Based on actual operation requirements of the operator network, the OAM system classifies network management into three types: operation (operation), administration (administration), and maintenance (maintenance). The operation is mainly to complete routine analysis, prediction, planning, and configuration for a network and a service; and the maintenance is mainly routine operation activities such as tests and fault management of the network and the service thereof.

The data analytics function may include a network function that provides a predictive analysis service (namely, a predictive analytics function), and may collect data from various NFs (for example, the AF, the AMF, the SMF, the PCF, and the NEF) or the OAM system for analysis and prediction. In a 5G communication system, the data analytics function may be specifically the NWDAF, the MDAF, or the like. In embodiments of this application, an example in which the data analytics function is the NWDAF is used for description, but a specific form factor and an implementation form are not limited.

It should be noted that, in embodiments of this application, a data-driven network function, that is, a recommendation service function, may be newly added, and may be configured to execute a recommendation service. For specific content of the recommendation service function, refer to the following descriptions. Details are not described herein. The recommendation service function and the predictive analytics function may be centralized in a same network element (that is, the recommendation service function and the predictive analytics function are a same data analytics function). For example, the recommendation service function may be a unit in the NWDAF, and in this case, the NWDAF network element is referred to as an NWDAF network element that supports the recommendation service. The recommendation service function may alternatively be an independent network element. This is not limited herein.

In addition, the foregoing CN devices may also be referred to as network elements or function network elements. In the 5G communication system, function network elements may be names of the function network elements shown in FIG. 4. In a communication system (for example, a 6G communication system) evolved after 5G, the function network elements may still be the names of the function network elements shown in FIG. 4, or may have other names. For example, in the 5G communication system, the user plane function may be the UPF. In the communication system (for example, the 6G communication system) evolved after 5G, the user plane function may still be the UPF, or may have another name. This is not limited in this application.

It should be further noted that, in the 5G communication system, functions implemented by the function network elements may be independent as shown in FIG. 4. In the communication system (for example, the 6G communication system) evolved after 5G, the function network elements may still be in an independent state as shown in FIG. 4, or functions of the plurality of function network elements in FIG. 4 may be implemented by an integrated function network element. For example, in the 5G communication system, a function related to a user plane is implemented by the UPF, and a function related to access and mobility management is implemented by the AMF. In the communication system (for example, the 6G communication system) evolved after 5G, the function related to the user plane may still be implemented by the UPF, and the function related to access and mobility management may still be implemented by the AMF; or both the function related to the user plane and the function related to access and mobility management may be implemented by an integrated function network element. This is not limited in this application.

In FIG. 4, Nnssf, Nnef, Nnrf, Npcf, Nudm, Naf, Nudr, Nnssaaf, Nausf, Namf, Nsmf, Nnsacf, N1, N2, N3, N4, and N6 are interface sequence numbers. For meanings of these interface sequence numbers, refer to meanings defined in relevant standard protocols. This is not limited herein.

### IV. DN

The DN, also referred to as a packet data network (packet data network, PDN), is a network located outside an operator network. The operator network may access a plurality of DNs. Application servers corresponding to a plurality of services may be deployed in the DN, to provide a plurality of possible services for a terminal device.

For ease of understanding the solutions provided in embodiments of this application, the following describes a recommendation service in embodiments of this application.

Using an NWDAF as an example, other NF network elements in the network consume predictive analysis services provided by the NWDAF and adjust network operations based on the prediction output of the NWDAF.

For example, an SMF may select or reselect, based on a load predictive analysis result, of a UPF, output by the NWDAF, a UPF for a protocol data unit session (protocol data unit session, PDU Session) that is being established or has been established, to achieve load balancing of a plurality of UPF network elements and prevent overload of a UPF. The SMF network element may alternatively select, based on service experience analysis and prediction, of an application, output by the NWDAF, a user plane path (UP path) with better experience for a session for application service packet transmission. The UP path includes a UPF, a data network access identifier (Data Network Access Identifier, DNAI), and/or an application server instance, where the DNAI identifies a mobile edge computing (mobile edge computing, MEC) node.

For another example, a PCF may determine an offloading control policy based on service experience analysis and prediction, of an application, output by the NWDAF, so that a service packet of the application is processed on a nearby MEC node.

For another example, an AF may deploy an application server in MEC with better service experience based on service experience analysis and prediction, of an application, output by the NWDAF, and select an appropriate application server instance for a user through application load balancing.

For another example, a PCF network element may adjust, based on user plane congestion analysis and prediction output by the NWDAF, quality of service (quality of service, QoS) parameters of several applications with the heaviest traffic, to limit a maximum data rate of these applications, and avoid user plane congestion.

However, a plurality of different NF network elements lack cooperation when using the prediction output of the NWDAF to respectively decide actions to be taken by the NF network elements. For example, when the SMF and the AF simultaneously decide, based on service experience prediction of the NWDAF, actions to be taken, a UPF and a DNAI that are selected by the SMF may not match an application server instance selected by the AF (that is, the UPF, the DNAI, and the application server instance are not located on a same MEC node), causing a failure in achieving optimal service experience. For another example, when simultaneously selecting a UPF based on load prediction of the UPF, a plurality of SMFs may simultaneously choose to assign a large quantity of newly established PDU sessions to a UPF with the lowest load. As a result, the load of the UPF suddenly increases, resulting in load fluctuation of the UPF.

Therefore, an output of a global recommendation service is needed to guide a plurality of NF network elements to mutually cooperate to take better actions for the entire network. As shown in FIG. 1, a basic architecture of a recommendation service is currently provided, with a central network automation function network element added. The central network automation function network element is used to obtain a quality of experience level (that is, a target value) expected to be achieved for a target application in a specified location area and a network operation prediction result (that is, a prediction output, for example, an experience analysis prediction result, a user plane congestion prediction result, or a UPF load prediction result) output by an NWDAF, to determine recommended actions (for example, recommended UPF network element selection, a recommended control policy for a terminal, and a recommended service packet sending parameter for an application) to be taken by each network element in the specified location area. Factors affecting quality of service experience are controlled by a plurality of network elements such as a PCF, an SMF, and an AF. These network elements all perform network adjustment based on the recommended actions determined by the central network automation function network element, thereby enabling coordinated operation among the plurality of network elements to implement network automation.

However, when determining the recommended actions for respective network elements, the central network automation function network element generally needs to rely on knowledge graphs of the network elements or perform in-depth analysis of processing logical relationships among the network elements in the network, in order to output appropriate recommended actions. Therefore, it is inevitable to understand service logic of each network element, and it is also necessary to develop different recommendation service functions based on different service logic for different service scenarios. Such an approach not only increases workloads, but also reduces the adaptability and flexibility of recommendation services.

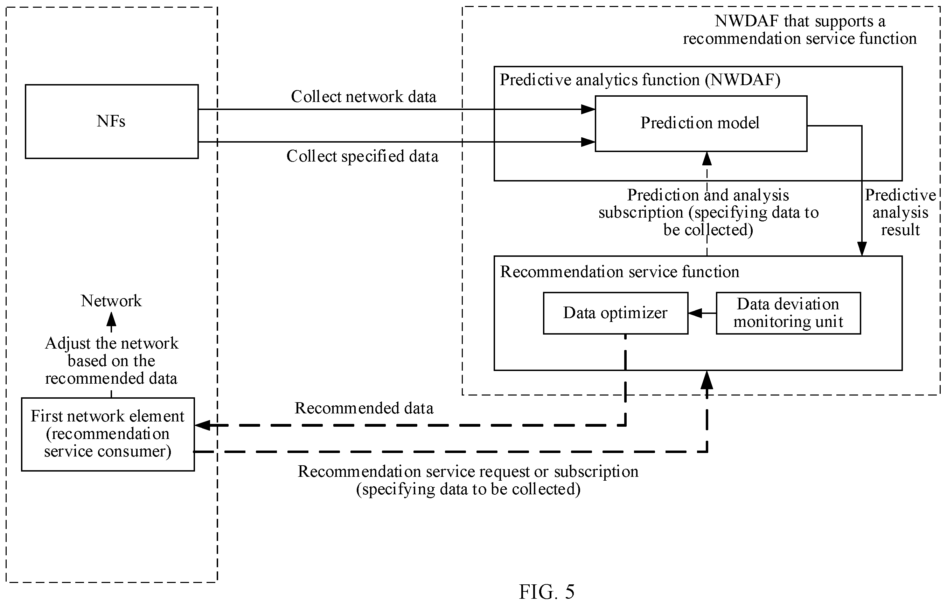

Therefore, to provide a globally optimized data recommendation service without the need to understand service logic of each network element, thereby helping improve the adaptability and flexibility of the data recommendation service, embodiments of this application provide a basic architecture of a new recommendation service. As shown in FIG. 5, the basic architecture of the recommendation service includes a first network element (that is, a recommendation service consumer), a recommendation service function, and a predictive analytics function.

The first network element is a network element that consumes a recommendation service, for example, may be an SMF, a PCF, an AF, or another function network element that forms a network, or may be an OAM system of the network. The recommendation service function is a newly added data-driven network function, and is configured to: receive a recommendation service request or a recommendation subscription request sent by another NF network element; obtain network data, output by the predictive analytics function, of network operation at a future moment; and determine, with reference to the predicted network data and a network operation objective, network data output by the recommendation service function. The recommendation service function may specifically include a data optimizer unit and a data deviation monitoring unit. The data deviation monitoring unit may determine, based on an output of a prediction model, a deviation between the output and an optimization target data; and the data optimizer determines, based on the deviation from the target data, a recommended data output that can be currently close to an optimization target. The predictive analytics function may be the NWDAF mentioned above. It should be noted that the recommendation service function and the predictive analytics function may be centralized in a same network element (that is, the recommendation service function and the predictive analytics function are a same data analytics function). For example, the recommendation service function may be a unit in an NWDAF, and in this case, the NWDAF network element is referred to as an NWDAF network element that supports the recommendation service. That is, it may be understood as that the NWDAF network element that supports the recommendation service includes both the predictive analytics function and the recommendation service function. It is clear that the recommendation service function may alternatively be an independent network element.

Specifically, the first network element may send a recommendation service request or subscription to the recommendation service function, and specify, in the recommendation service request or subscription, data that needs to be collected. The recommendation service function sends, to the predictive analytics function through prediction and analysis subscription, the specified data that needs to be collected. The predictive analytics function may collect specified data from network elements (NFs) and network data, analyze and predict the collected data based on the prediction model to obtain a predictive analysis result, and send the predictive analysis result to the recommendation service function. The recommendation service function performs processing by using the data deviation monitoring unit and the data optimizer to obtain recommended data, and sends the recommended data to the first network element, so that the first network element can perform network adjustment based on the recommended data, and a plurality of network elements can mutually cooperate, to achieve the optimization target. The recommendation service function and the predictive analytics function may be centralized in the same network element, or may be independent network elements respectively. This is not limited herein.

Because the data specified to be collected is determined by the first network element based on service processing logic, a prediction output of the predictive analytics function can feed back impact of network adjustment behavior on the network. In addition, there is an association relationship between the recommended data and the data specified by the first network element to be collected, where the association relationship is determined by the first network element based on the service processing logic, and does not need to be mastered by the recommendation service function. Therefore, an entire operating process of the recommendation service function is driven by data, so that a globally optimized data recommendation service can be provided without the need to understand service logic of each network element, thereby reducing workloads and helping improve adaptability and flexibility of the data recommendation service.

The following further describes in detail a network data analysis method and a communication apparatus that are provided in embodiments of this application.

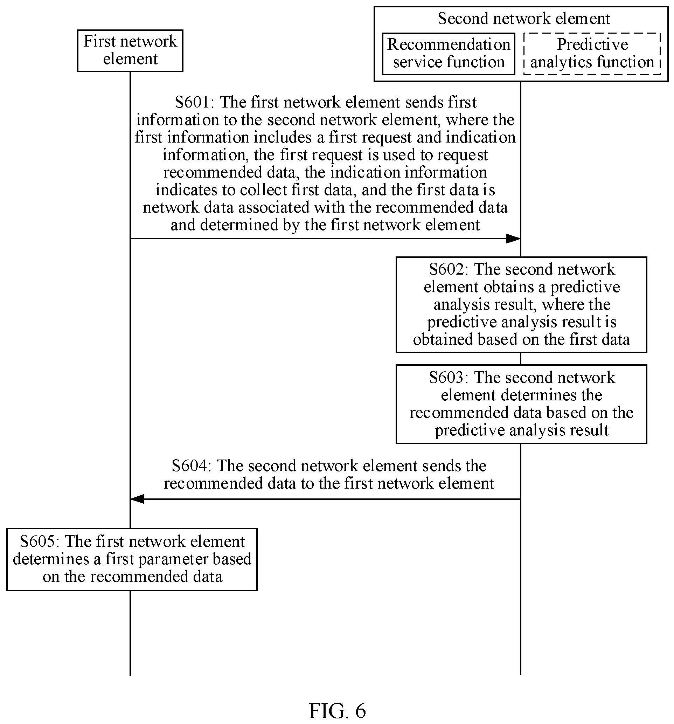

FIG. 6 is a schematic flowchart of a network data analysis method according to an embodiment of this application. As shown in FIG. 6, the network data analysis method includes the following steps S601 to S605. The method shown in FIG. 6 may be performed by a first network element and a second network element. Alternatively, the method shown in FIG. 6 may be performed by a chip in a first network element and a chip in a second network element. This is not limited in this embodiment of this application. FIG. 6 is described by using an example in which the method is performed by the first network element and the second network element. The second network element includes a recommendation service function. For example, the second network element may be the recommendation service function (which may be considered that the recommendation service function is an independent network element), or the second network element may include both the recommendation service function and a predictive analytics function (which may be considered that the recommendation service function and the predictive analytics function are centralized in a same network element, that is, the recommendation service function and the predictive analytics function are a same data analytics function, for example, an NWDAF network element that supports a recommendation service).

S601: The first network element sends first information to the second network element, where the first information includes a first request and indication information, the first request is used to request recommended data, the indication information indicates to collect first data, and the first data is network data associated with the recommended data and determined by the first network element. Correspondingly, the second network element receives the first information from the first network element.

In this embodiment of this application, the first request herein may be considered as a recommendation service subscription request, used to request the recommended data. The indication information may specify the first data that needs to be collected. Optionally, the indication information may further indicate a data source of the first data, and the data source of the first data indicates to collect the first data from one or more specified network elements or a specified network range. Optionally, after receiving the recommendation service subscription request from the first network element, the second network element may send a response message indicating a subscription success to the first network element. The indication information may alternatively be carried in the first request. This is not limited herein.

In a possible implementation, the method further includes: The first network element determines, based on service processing logic of the first network element, that the first data is associated with the recommended data. The service processing logic refers to a rule and a procedure used when a network element provides a service for another network element or consumes a service provided by another network element.

It may be understood as that the first data specified to be collected is determined by the first network element based on the service processing logic, and a predictive analysis result subsequently determined based on the first data can also naturally feed back impact of network adjustment behavior on a network. In addition, the association relationship between the first data and the recommended data is also determined by the first network element based on the service processing logic. Therefore, an operating process performed by the second network element after the second network element receives the first information is driven by data, so that a globally optimized data recommendation service can be provided without the need to understand service logic of each network element, thereby reducing workloads and helping improve adaptability and flexibility of the data recommendation service.

In a possible implementation, the first information further includes an expected value of a target parameter. For example, the target parameter may be quality of experience, a user plane congestion level, or load levels of a plurality of UPFs. It is clear that the target parameter may alternatively be another parameter. This is not limited herein. The expected value of the target parameter herein may be considered as an optimization target. It should be noted that, if the first information sent by the first network element does not carry the expected value of the target parameter, the second network element may alternatively obtain the expected value of the target parameter (that is, the optimization target) through pre-configuration or in another manner.

In a possible implementation, the second network element further needs to determine an analysis type identifier, where the analysis type identifier indicates a predictive analysis type of the collected first data. An analysis direction of the first data may be subsequently determined based on the analysis type identifier. For example, the analysis type identifier may indicate any one of the following types: service experience analysis, user plane congestion analysis, or network element load analysis. It is clear that the analysis type identifier may alternatively indicate another analysis type. This is not limited herein.

The second network element may determine the analysis type identifier in either of the following two manners. The following provides specific descriptions. This manner helps improve flexibility of determining the analysis type identifier.

Manner 1: The first information further includes the analysis type identifier.

During specific implementation, after determining the analysis type identifier, the first network element may send the analysis type identifier through the first information to the second network element.

Optionally, the method further includes: The first network element determines the analysis type identifier based on the service processing logic of the first network element.

For example, it is assumed that the first network element includes at least one SMF, and the at least one SMF expects the second network element to recommend selection and distribution proportions for UPFs, to prevent UPF load imbalance or overload. In this case, the SMF may determine, based on the service processing logic, that operating load levels of the UPFs need to be analyzed, and therefore determine that the analysis type identifier indicates the network element load analysis.

For another example, it is assumed that the first network element includes an AF, a PCF, and an SMF, and the AF, the PCF, and the SMF expect the second network element to guide improvement of service experience (quality of experience, QoE) of an application. In this case, the AF, the PCF, and the SMF may determine, based on the service processing logic, that the QoE of the application needs to be analyzed, and therefore determine that the analysis type identifier indicates the service experience analysis.

For another example, it is assumed that the first network element includes a PCF, and the PCF expects the second network element to adjust a QoS parameter, to avoid user plane congestion. In this case, the PCF may determine, based on the service processing logic, that the user plane congestion needs to be analyzed, and therefore determine that the analysis type identifier indicates the user plane congestion analysis.

Optionally, the method further includes: The first network element determines the first request and the indication information based on the analysis type identifier.

For example, assuming that the analysis type identifier indicates the network element load analysis, a first request of the at least one SMF may be used to request a quantity of N4 interface sessions recommended to be established on the plurality of UPFs. The indication information may indicate to collect a quantity of N4 interface sessions established by the at least one SMF on the plurality of UPFs at a current time and/or a historical time.

For another example, assuming that the analysis type identifier indicates the service experience analysis, a first request of the AF may be used to request a recommended server instance of a first application; a first request of the PCF may be used to request a recommended peak rate and a recommended average rate of the first application; or a first request of the SMF may be used to request a recommended DNAI of the first application. The indication information may indicate to collect a peak rate and an average rate of the first application at a current time and/or a historical time.

For another example, assuming that the analysis type identifier indicates the user plane congestion analysis, a first request of the PCF may be used to request a recommended peak throughput and/or a recommended average throughput of a second application. The indication information may indicate to collect a user plane congestion level of the second application at a current time and/or a historical time.

Manner 2: The second network element determines the analysis type identifier based on the target parameter and the first request.

During specific implementation, the second network element may determine the analysis type identifier based on the target parameter and the first request.

For example, assuming that the target parameter is the load levels of the plurality of UPFs, and the first request is used to request a quantity of N4 interface sessions recommended to be established on the plurality of UPFs, it may be determined that the analysis type identifier indicates the network element load analysis.

For another example, assuming that the target parameter is the quality of experience; and a first request for the AF is used to request a recommended server instance of a first application, a first request for the PCF is used to request a recommended peak rate and a recommended average rate of the first application, or a first request for the SMF is used to request a recommended DNAI of the first application, it may be determined that the analysis type identifier indicates the service experience analysis.

For another example, assuming that the target parameter is the user plane congestion level, and a first request for the PCF is used to request a recommended peak throughput and/or a recommended average throughput of a second application, it may be determined that the analysis type identifier indicates the user plane congestion analysis.

S602: The second network element obtains the predictive analysis result, where the predictive analysis result is obtained based on the first data.

In this embodiment of this application, after receiving the first information, the second network element further obtains the predictive analysis result based on the first data. The second network element herein may be a recommendation service function (which may be considered that the recommendation service function is an independent network element), or the second network element may include both a recommendation service function and a predictive analytics function (which may be considered that the recommendation service function and the predictive analytics function are centralized in a same network element, that is, the recommendation service function and the predictive analytics function are a same data analytics function). The following separately describes, for the two cases, a specific implementation in which the second network element obtains the predictive analysis result.

Case 1: The second network element is the recommendation service function.

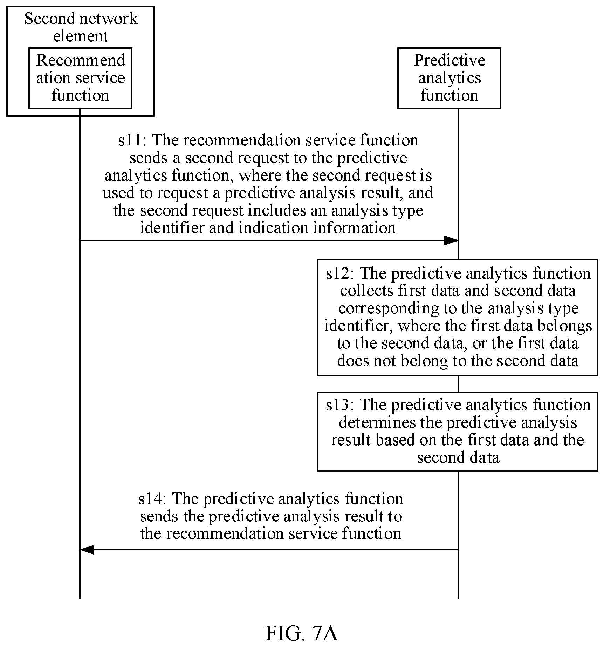

The specific implementation in which the second network element obtains the predictive analysis result may include the following steps s11 to s14, as shown in FIG. 7A. Based on this manner, the predictive analysis result can reflect the impact of the network adjustment behavior on the network, to help improve accuracy of the predictive analysis result and further improve efficiency of the recommendation service.

s11: The recommendation service function sends a second request to the predictive analytics function, where the second request is used to request the predictive analysis result, and the second request includes the analysis type identifier and the indication information. Correspondingly, the predictive analytics function receives the second request from the recommendation service function.

During specific implementation, the second request herein may be considered as a prediction and analysis subscription request. When the second network element is the recommendation service function, the recommendation service function may request the predictive analysis result from the predictive analytics function.

Optionally, the method further includes: The recommendation service function determines analysis filtering information based on the first request, where the analysis filtering information indicates a network range corresponding to the predictive analysis result.

Specifically, if the first request includes the indication information, the analysis filtering information may be determined based on the indication information, in the first request, for collecting the first data, where for example, the analysis filtering information may be determined as the first application based on the indication information, in the first request, for obtaining the recommended DNAI, the peak rate, and the average rate of the first application; or the analysis filtering information is determined based on the indication information, in the first request, of the data source of the first data, where for example, if one or more UPFs are specified based on the data source, in the first request, of the first data, it may be determined that the analysis filtering information is a network element instance list including the one or more specified UPFs. The second request further includes the analysis filtering information. Based on this manner, prediction analysis efficiency can be improved.

It should be noted that an application identifier (App ID) may serve as the analysis filtering information, and in this case, service experience of an application corresponding to the application identifier needs to be analyzed and predicted; or a network area or a network element function of a type may serve as the analysis filtering information, and in this case, service experience of the network area or the network element function of the type needs to be analyzed and predicted. It is clear that the analysis filtering information may alternatively be represented in another form. This is not limited herein.

s12: The predictive analytics function collects the first data and second data corresponding to the analysis type identifier, where the first data belongs to the second data, or the first data does not belong to the second data.

During specific implementation, in addition to collecting the specified first data, the predictive analytics function needs to collect the second data corresponding to the analysis type identifier. The second data herein may be considered as network data that needs to be collected for the analysis type identifier. The first data specified to be collected may belong to the network data that needs to be collected for the analysis type identifier, or may not belong to the network data that needs to be collected for the analysis type identifier. This is not limited herein. For example, when the analysis type identifier is the network element load analysis, the first data indicates that the collected quantity of N4 interface sessions established on the UPFs does not belong to the second data corresponding to the network element load analysis type identifier. For another example, when the analysis type identifier is the service experience analysis, the first data indicates that the collected peak rate and the collected average rate of the first application belong to the second data corresponding to the network element load analysis type identifier.

Further, optionally, the indication information further indicates the data source of the first data. A specific implementation in which the predictive analytics function collects the first data may be: The predictive analytics function collects the first data from the data source. It may be understood as that the predictive analytics function may collect the first data from a specified data source (to be specific, the one or more specified network elements or the specified network range that serves as a source of the network data). Based on this manner, the first network element may determine, as the source of the first data based on the service processing logic, one or more network elements that can best reflect the impact of the network adjustment behavior on the network, to improve data collection efficiency in a case in which the recommendation service function does not need to understand service logic of each network element, thus reducing workloads and improving adaptability and flexibility of the data recommendation service.

s13: The predictive analytics function determines the predictive analysis result based on the first data and the second data.

During specific implementation, the predictive analytics function may perform offline model training by using the first data and the second data, to obtain a predictive analytics model; or may obtain a predictive analytics model from a network element, for example, a model training logical function (model training logical function, MTLF), which is not limited herein, and then use the predictive analytics model to process data collected at the current time in the first data, to obtain the predictive analysis result.

In a possible implementation, a specific implementation in which the predictive analytics function determines the predictive analysis result based on the first data and the second data may be: increasing, based on the indication information, a weight of the first data relative to data in the second data other than the first data, or increasing, based on the indication information, a weight of the first data relative to the second data; and determining the predictive analysis result based on the weight of the first data, a weight of the second data, the first data, and the second data.

It may be understood as that, when the first data belongs to the second data, during obtaining of the predictive analysis result based on the predictive analytics model, the predictive analytics function may increase, based on an indication of collecting the first data, the weight of the first data relative to the data in the second data other than the first data (which may be understood as that the weight of the first data is higher than a weight of the data in the second data other than the first data), so that the predictive analysis result can more accurately reflect the impact of the network adjustment behavior on the network; or when the first data does not belong to the second data, the predictive analytics function needs to obtain the predictive analysis result based on both the first data and the second data, that is, increase, based on an indication of collecting the first data, the weight of the first data relative to the second data (which may be understood as that the weight of the first data is higher than the weight of the second data), so that the predictive analysis result can reflect the impact of the network adjustment behavior on the network. This manner helps improve accuracy of the predictive analysis result and further improves efficiency of the recommendation service.

s14: The predictive analytics function sends the predictive analysis result to the recommendation service function. Correspondingly, the recommendation service function receives the predictive analysis result from the predictive analytics function.

Case 2: The second network element includes both the recommendation service function and the predictive analytics function.

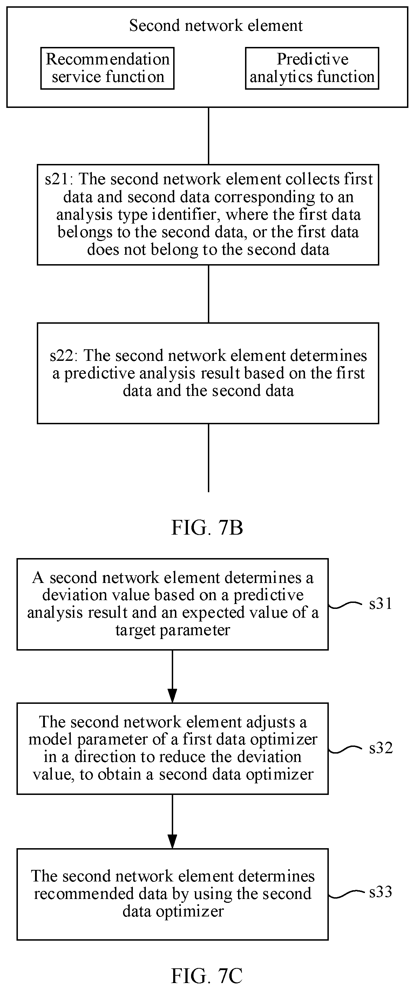

The specific implementation in which the second network element obtains the predictive analysis result may include the following steps s21 and s22, as shown in FIG. 7B. This manner helps improve accuracy of the predictive analysis result and improves efficiency.

s21: The second network element collects the first data and second data corresponding to the analysis type identifier, where the first data belongs to the second data, or the first data does not belong to the second data.

During specific implementation, when the second network element includes the recommendation service function and the predictive analytics function, the second network element may collect the specified first data and the second data corresponding to the analysis type identifier. The second data herein may be considered as network data that needs to be collected for the analysis type identifier. The first data specified to be collected may belong to the network data that needs to be collected for the analysis type identifier, or may not belong to the network data that needs to be collected for the analysis type identifier. This is not limited herein.

s22: The second network element determines the predictive analysis result based on the first data and the second data.

During specific implementation, the second network element may perform offline model training by using the first data and the second data, to obtain a predictive analytics model; or may obtain a predictive analytics model from a network element, for example, an MTLF, which is not limited herein; and then use the predictive analytics model to process data collected at the current time in the first data, to obtain the predictive analysis result.

In a possible implementation, determining the predictive analysis result based on the first data and the second data includes: increasing, based on the indication information, a weight of the first data relative to data in the second data other than the first data, or increasing, based on the indication information, a weight of the first data relative to the second data; and determining the predictive analysis result based on the weight of the first data, a weight of the second data, the first data, and the second data.

It may be understood as that, when the first data belongs to the second data, during obtaining of the predictive analysis result based on the predictive analytics model, the recommendation service function may increase, based on an indication of collecting the first data, the weight of the first data relative to the data in the second data other than the first data (which may be understood as that the weight of the first data is higher than a weight of the data in the second data other than the first data), so that the predictive analysis result can more accurately reflect the impact of the network adjustment behavior on the network; or when the first data does not belong to the second data, the recommendation service function needs to obtain the predictive analysis result based on both the first data and the second data, that is, may increase, based on an indication of collecting the first data, the weight of the first data relative to the second data (which may be understood as that the weight of the first data is higher than the weight of the second data), so that the predictive analysis result can reflect the impact of the network adjustment behavior on the network. This manner helps improve accuracy of the predictive analysis result and further improves efficiency of the recommendation service.

S603: The second network element determines the recommended data based on the predictive analysis result.

In a possible implementation, a specific implementation in which the second network element determines the recommended data based on the predictive analysis result may include the following steps s31 to s33, as shown in FIG. 7C. Based on this manner, accuracy of the recommended data can be improved.

s31: The second network element determines a deviation value based on the predictive analysis result and the expected value of the target parameter.

During specific implementation, the deviation value between the predictive analysis result and the expected value of the target parameter is calculated by using a data deviation monitoring unit of the recommendation service function.

s32: The second network element adjusts a model parameter of a first data optimizer in a direction to reduce the deviation value, to obtain a second data optimizer.

During specific implementation, the second network element includes the recommendation service function, and the first data optimizer in the recommendation service function may also be a machine learning model having an initially configured model parameter. The initially configured model parameter may be obtained through theoretical calculation, or may be obtained through online learning during operation of an experimental network or another network. This is not limited herein. The first data optimizer continuously adjusts the machine learning model parameter in a direction to reduce the deviation value, to converge to an operation target more quickly, and obtain a final second data optimizer. It should be noted that the second network element may adjust the model parameter of the first data optimizer once every unit time (for example, 1 second or 0.5 minutes), to obtain the latest second data optimizer, and the first data optimizer is increasingly accurate by adjusting the model parameter through the online learning during network operation.

s33: The second network element determines the recommended data by using the second data optimizer.

During specific implementation, the second network element further obtains third data at the current time, for example, information such as a bit rate, a DNAI, an application identifier, a subscription permanent identifier, an assigned network slice instance identifier, a validity period, and spatial validity. This is not limited herein. The second network element processes the third data by using the second data optimizer, and outputs the recommended data.

S604: The second network element sends the recommended data to the first network element. Correspondingly, the first network element receives the recommended data from the second network element.

S605: The first network element determines a first parameter based on the recommended data.

In a possible implementation, the first data is a network operation indicator affected by the first parameter.

It may be understood as that, after obtaining the recommended data, the first network element may execute an action based on the recommended data, that is, determine the first parameter, to achieve a network operation objective.

For example, assuming that the first network element includes at least one SMF, and recommended data for the at least one SMF is a quantity of N4 interface sessions recommended to be established on a plurality of UPFs, the at least one SMF may determine selection and distribution proportions (that is, first parameters) for the plurality of UPFs based on the recommended data.

For another example, assuming that the first network element includes an AF, a PCF, and an SMF, if recommended data for the AF is a recommended server instance of the first application, the AF may select a server instance (that is, the first parameter) based on the recommended data; if recommended data for the PCF is a recommended peak rate and a recommended average rate of the first application, the PCF may determine a QoS parameter (that is, the first parameter) of an application service packet based on the recommended data, for example, determine a maximum flow bit rate (maximum flow bit rate, MFBR) or an aggregate maximum rate (aggregate maximum bit rate, AMBR) based on the recommended peak rate of the first application and determine a guaranteed bit rate (guaranteed flow bit rate, GFBR) based on the recommended average rate of the first application; and if recommended data for the SMF is a recommended DNAI of the first application, the SMF may select a user plane path (that is, the first parameter) based on the recommended data.

For another example, assuming that the first network element includes a PCF, if recommended data for the PCF is a recommended peak throughput and/or a recommended average throughput of a second application, the PCF may determine QoS parameters (that is, first parameters) of main applications of several types based on the recommended data. For example, an MFBR is set based on the recommended peak throughput of the second application, and a GFBR is set based on the recommended average throughput of the second application. The PCF may further determine, based on the recommended data, a 5G quality of service identifier (5G QoS Identifier, 5QI) used for application data.

It should be noted that steps S602 to S605 are repeatedly performed at an interval of a preset time period (for example, every 30 seconds), until the first network element sends a recommendation service unsubscription message to the second network element.

It can be learned that, based on the method described in FIG. 6, the globally optimized data recommendation service can be provided without the need to understand the service logic of each network element, thereby reducing workloads and helping improve adaptability and flexibility of the data recommendation service.

The following further describes in detail, in different scenarios, the network data analysis method and the communication apparatus that are provided in embodiments of this application.

**I. To improve QoE of an application to an expected value, a PCF, an SMF, and an AF request recommended data from a recommendation service function.**

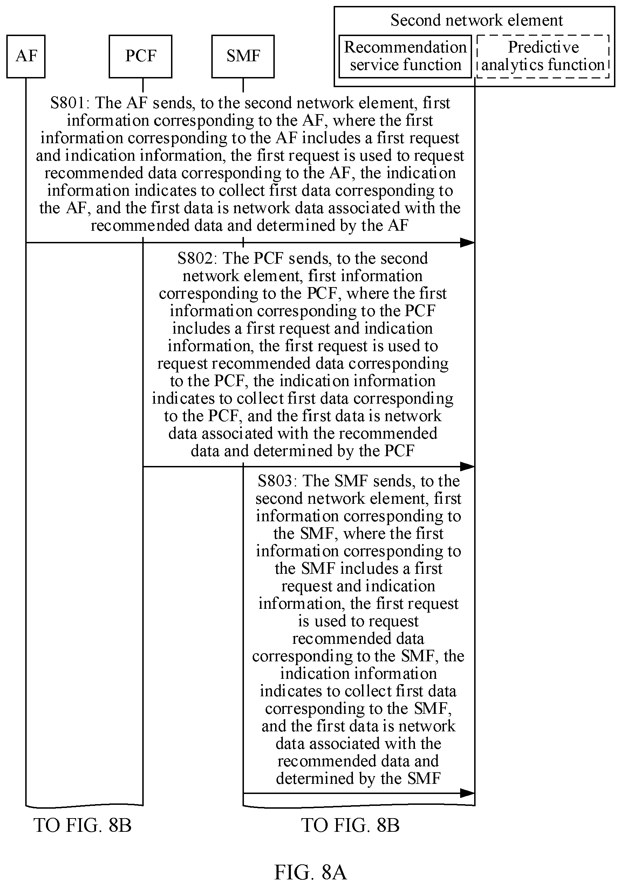

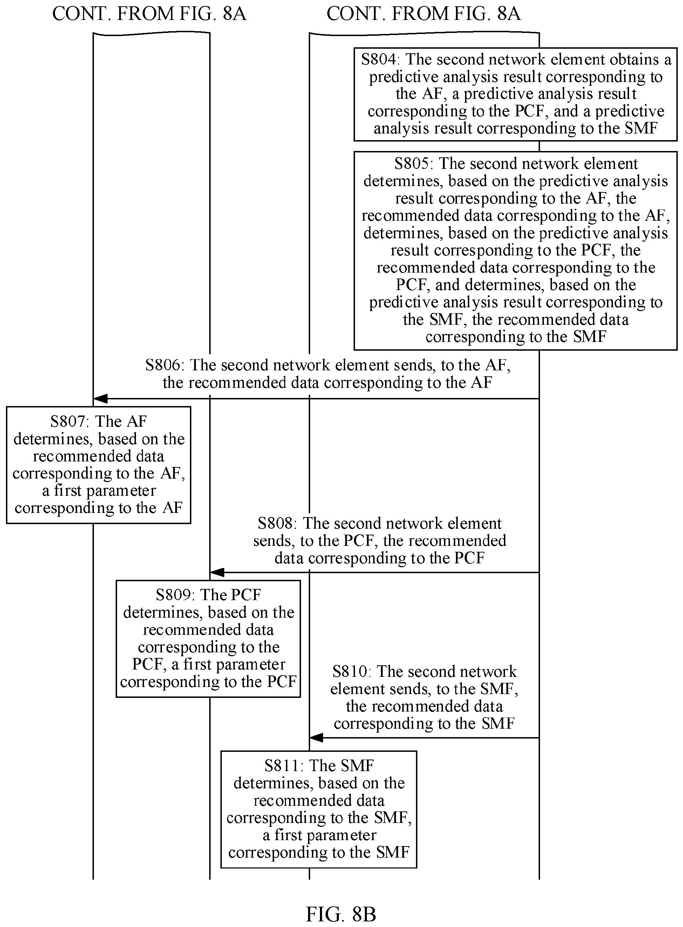

FIG. 8A and FIG. 8B are a schematic flowchart of another network data analysis method according to an embodiment of this application. As shown in FIG. 8A and FIG. 8B, the network data analysis method includes the following steps S801 to S811. The method shown in FIG. 8A and FIG. 8B may be performed by a first network element and a second network element. Alternatively, the method shown in FIG. 8A and FIG. 8B may be performed by a chip in a first network element and a chip in a second network element. This is not limited in this embodiment of this application. FIG. 8A and FIG. 8B are described by using an example in which the method is performed by the first network element and the second network element. The first network element includes a PCF, an SMF, and an AF. The second network element includes a recommendation service function. For example, the second network element may be the recommendation service function (which may be considered that the recommendation service function is an independent network element), or the second network element may include both the recommendation service function and a predictive analytics function (which may be considered that the recommendation service function and the predictive analytics function are centralized in a same network element, that is, the recommendation service function and the predictive analytics function are a same data analytics function, for example, an NWDAF network element that supports a recommendation service).

S801: The AF sends, to the second network element, first information corresponding to the AF, where the first information corresponding to the AF includes a first request and indication information, the first request is used to request recommended data corresponding to the AF, the indication information indicates to collect first data corresponding to the AF, and the first data is network data associated with the recommended data and determined by the AF. Correspondingly, the second network element receives the first information from the AF.

In this embodiment of this application, when the AF sends, to the second network element, the first information corresponding to the AF, the recommended data corresponding to the AF and requested by using the first request is a recommended server instance of a first application, and the first data corresponding to the AF and to be collected as indicated by the indication information is a peak rate and an average rate of the first application at a current time and/or a historical time. The indication information may alternatively be carried in the first request. This is not limited herein.

In a possible implementation, the first information corresponding to the AF further includes an expected value of a target parameter. The target parameter is quality of experience. It should be noted that, if the first information sent by the AF does not carry the expected value of the target parameter, the second network element may alternatively obtain the expected value of the target parameter (that is, an optimization target) through pre-configuration or in another manner.

In a possible implementation, the method further includes: The AF determines, based on service processing logic of the AF, that the first data is associated with the recommended data.

In a possible implementation, the second network element further needs to determine an analysis type identifier corresponding to the AF, where the analysis type identifier herein corresponding to the AF indicates service experience analysis. The second network element may determine, in either of the following two manners, the analysis type identifier corresponding to the AF. The following provides specific descriptions.

Manner 1: The first information corresponding to the AF further includes the analysis type identifier corresponding to the AF.

Manner 2: The second network element determines, based on the target parameter and the first request corresponding to the AF, the analysis type identifier corresponding to the AF.

For a specific implementation of step S801, refer to the specific implementation of step S601, and a main difference lies in that the first network element is the AF. Details are not described herein again.

S802: The PCF sends, to the second network element, first information corresponding to the PCF, where the first information corresponding to the PCF includes a first request and indication information, the first request is used to request recommended data corresponding to the PCF, the indication information indicates to collect first data corresponding to the PCF, and the first data is network data associated with the recommended data and determined by the PCF. Correspondingly, the second network element receives the first information from the PCF.

In this embodiment of this application, when the PCF sends, to the second network element, the first information corresponding to the PCF, the recommended data corresponding to the PCF and requested by using the first request is a recommended peak rate and/or a recommended average rate that are/is of a first application, and the first data corresponding to the PCF and to be collected as indicated by the indication information is a peak rate and an average rate of the first application at a current time and/or a historical time.

In a possible implementation, the first information corresponding to the PCF further includes an expected value of a target parameter. The target parameter is quality of experience. It should be noted that, if the first information sent by the PCF does not carry the expected value of the target parameter, the second network element may alternatively obtain the expected value of the target parameter (that is, an optimization target) through pre-configuration or in another manner.

In a possible implementation, the method further includes: The PCF determines, based on service processing logic of the PCF, that the first data is associated with the recommended data.

In a possible implementation, the second network element further needs to determine an analysis type identifier corresponding to the PCF, where the analysis type identifier herein corresponding to the PCF indicates service experience analysis. The second network element may determine, in either of the following two manners, the analysis type identifier corresponding to the PCF. The following provides specific descriptions.

Manner 1: The first information corresponding to the PCF further includes the analysis type identifier corresponding to the PCF.

Manner 2: The second network element determines, based on the target parameter and the first request corresponding to the PCF, the analysis type identifier corresponding to the PCF.

For a specific implementation of step S802, refer to the specific implementation of step S601, and a main difference lies in that the first network element is the PCF. Details are not described herein again.

S803: The SMF sends, to the second network element, first information corresponding to the SMF, where the first information corresponding to the SMF includes a first request and indication information, the first request is used to request recommended data corresponding to the SMF, the indication information indicates to collect first data corresponding to the SMF, and the first data is network data associated with the recommended data and determined by the SMF. Correspondingly, the second network element receives the first information from the SMF.

In this embodiment of this application, when the SMF sends, to the second network element, the first information corresponding to the SMF, the recommended data corresponding to the SMF and requested by using the first request is a recommended DNAI of a first application, and the first data corresponding to the SMF and to be collected as indicated by the indication information is a peak rate and an average rate of the first application at a current time and/or a historical time.

In a possible implementation, the first information corresponding to the SMF further includes an expected value of a target parameter. The target parameter is quality of experience. It should be noted that, if the first information sent by the SMF does not carry the expected value of the target parameter, the second network element may alternatively obtain the expected value of the target parameter (that is, an optimization target) through pre-configuration or in another manner.

In a possible implementation, the method further includes: The SMF determines, based on service processing logic of the SMF, that the first data is associated with the recommended data.

In a possible implementation, the second network element further needs to determine an analysis type identifier corresponding to the SMF, where the analysis type identifier herein corresponding to the SMF indicates service experience analysis. The second network element may determine, in either of the following two manners, the analysis type identifier corresponding to the SMF. The following provides specific descriptions.

Manner 1: The first information corresponding to the SMF further includes the analysis type identifier corresponding to the SMF.

Manner 2: The second network element determines, based on the target parameter and the first request corresponding to the SMF, the analysis type identifier corresponding to the SMF.

For a specific implementation of step S803, refer to the specific implementation of step S601, and a main difference lies in that the first network element is the SMF. Details are not described herein again.

It should be noted that an execution sequence of steps S801, S802, and S803 is not limited.

S804: The second network element obtains a predictive analysis result corresponding to the AF, a predictive analysis result corresponding to the PCF, and a predictive analysis result corresponding to the SMF.

In this embodiment of this application, the predictive analysis result corresponding to the AF, the predictive analysis result corresponding to the PCF, and the predictive analysis result corresponding to the SMF are obtained based on the first data. The predictive analysis result corresponding to the AF, the predictive analysis result corresponding to the PCF, and the predictive analysis result corresponding to the SMF are all QoE of the first application at a next moment.

The second network element may be a recommendation service function (which may be considered that the recommendation service function is an independent network element), or the second network element may include both a recommendation service function and a predictive analytics function (which may be considered that the recommendation service function and the predictive analytics function are centralized in a same network element). The following separately describes, for the two cases, a specific implementation in which the second network element obtains the predictive analysis result corresponding to the AF, the predictive analysis result corresponding to the PCF, and the predictive analysis result corresponding to the SMF.

Case 1: The second network element is the recommendation service function.

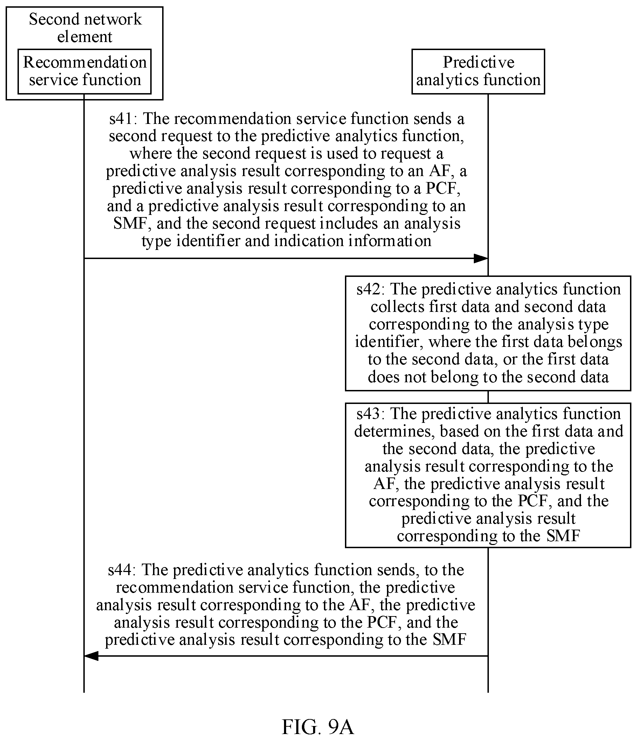

The specific implementation in which the second network element obtains the predictive analysis result corresponding to the AF, the predictive analysis result corresponding to the PCF, and the predictive analysis result corresponding to the SMF may include the following steps s41 to s44, as shown in FIG. 9A.

s41: The recommendation service function sends a second request to the predictive analytics function, where the second request is used to request the predictive analysis result corresponding to the AF, the predictive analysis result corresponding to the PCF, and the predictive analysis result corresponding to the SMF, and the second request includes an analysis type identifier and indication information. Correspondingly, the predictive analytics function receives the second request from the recommendation service function.

Optionally, the method further includes: The recommendation service function determines analysis filtering information based on the first request, where the analysis filtering information indicates a network range corresponding to the predictive analysis result; and the second request further includes the analysis filtering information. The indication information may be carried in the first request. Specifically, the analysis filtering information may be determined based on the indication information, in the first request, for collecting the first data; or the analysis filtering information may be determined based on a data source, in the first request, of the first data.

It is clear that the recommendation service function may alternatively send a plurality of second requests to the predictive analytics function, to respectively request the predictive analysis result corresponding to the AF, the predictive analysis result corresponding to the PCF, and the predictive analysis result corresponding to the SMF. This is not limited herein.

s42: The predictive analytics function collects the first data and second data corresponding to the analysis type identifier, where the first data belongs to the second data, or the first data does not belong to the second data. The first data collected by the predictive analytics function is a peak rate and an average rate of a first application at a current time and/or a historical time, and the first data is collected through a UPF. The second data collected by the predictive analytics function may include second information collected from the AF and third information collected from the UPF and/or the SMF. The second information includes quality of experience of the first application, a server instance of the first application, and an identifier of the first application at the current time and/or the historical time. The third information includes a DNAI, a user data rate (BitRate), a user packet delay (PktDelay), and a quality of service flow identifier (QoS flow identifier, QFI) corresponding to an application packet that are of the first application at the current time and/or the historical time.

s43: The predictive analytics function determines, based on the first data and the second data, the predictive analysis result corresponding to the AF, the predictive analysis result corresponding to the PCF, and the predictive analysis result corresponding to the SMF.

In a possible implementation, a specific implementation in which the predictive analytics function determines, based on the first data and the second data, the predictive analysis result corresponding to the AF, the predictive analysis result corresponding to the PCF, and the predictive analysis result corresponding to the SMF may be: increasing, based on the indication information, a weight of the first data relative to data in the second data other than the first data, or increasing, based on the indication information, a weight of the first data relative to the second data; and determining, based on the weight of the first data, a weight of the second data, the first data, and the second data, the predictive analysis result corresponding to the AF, the predictive analysis result corresponding to the PCF, and the predictive analysis result corresponding to the SMF.

s44: The predictive analytics function sends, to the recommendation service function, the predictive analysis result corresponding to the AF, the predictive analysis result corresponding to the PCF, and the predictive analysis result corresponding to the SMF. Correspondingly, the recommendation service function receives, from the predictive analytics function, the predictive analysis result corresponding to the AF, the predictive analysis result corresponding to the PCF, and the predictive analysis result corresponding to the SMF.

Case 2: The second network element includes both the recommendation service function and the predictive analytics function.

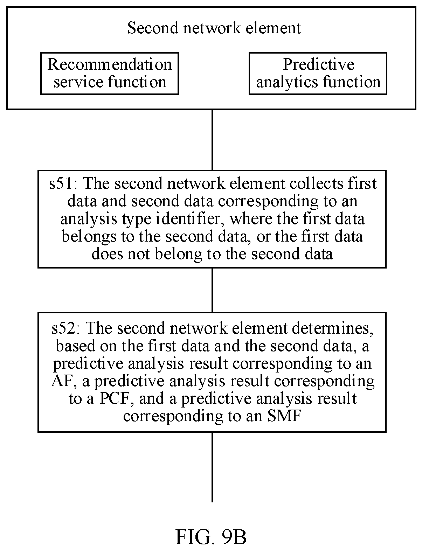

The specific implementation in which the second network element obtains the predictive analysis result corresponding to the AF, the predictive analysis result corresponding to the PCF, and the predictive analysis result corresponding to the SMF may include the following steps s51 and s52, as shown in FIG. 9B.

s51: The second network element collects the first data and second data corresponding to the analysis type identifier, where the first data belongs to the second data, or the first data does not belong to the second data.

The first data collected by the second network element is a peak rate and an average rate of a first application at a current time and/or a historical time, and the first data is collected through a UPF. The second data collected by the second network element may include second information collected from the AF and third information collected from the UPF and/or the SMF. The second information includes quality of experience of the first application, a server instance of the first application, and an identifier of the first application at the current time and/or the historical time. The third information includes a DNAI of the first application, a user data rate, a user packet delay, and a QFI corresponding to an application packet at the current time and/or the historical time.

s52: The second network element determines, based on the first data and the second data, the predictive analysis result corresponding to the AF, the predictive analysis result corresponding to the PCF, and the predictive analysis result corresponding to the SMF.

In a possible implementation, a specific implementation of determining, based on the first data and the second data, the predictive analysis result corresponding to the AF, the predictive analysis result corresponding to the PCF, and the predictive analysis result corresponding to the SMF may be: increasing, based on the indication information, a weight of the first data relative to data in the second data other than the first data, or increasing, based on the indication information, a weight of the first data relative to the second data; and determining, based on the weight of the first data, a weight of the second data, the first data, and the second data, the predictive analysis result corresponding to the AF, the predictive analysis result corresponding to the PCF, and the predictive analysis result corresponding to the SMF.

It should be noted that, for the specific implementation in which the second network element obtains the predictive analysis result corresponding to the AF, the predictive analysis result corresponding to the PCF, and the predictive analysis result corresponding to the SMF, refer to the specific implementation of step S602, and a main difference lies in that the first network element includes the AF, the PCF, and the SMF. Details are not described herein again.

S805: The second network element determines, based on the predictive analysis result corresponding to the AF, the recommended data corresponding to the AF, determines, based on the predictive analysis result corresponding to the PCF, the recommended data corresponding to the PCF, and determines, based on the predictive analysis result corresponding to the SMF, the recommended data corresponding to the SMF.

For a specific implementation in which the second network element determines, based on the predictive analysis result corresponding to the AF, the recommended data corresponding to the AF, refer to the specific implementation of step S603, and a main difference lies in that the first network element is the AF. Details are not described herein again. For a specific implementation in which the second network element determines, based on the predictive analysis result corresponding to the PCF, the recommended data corresponding to the PCF, also refer to the specific implementation of step S603, and a main difference lies in that the first network element is the PCF. Details are not described herein again. For a specific implementation in which the second network element determines, based on the predictive analysis result corresponding to the SMF, the recommended data corresponding to the SMF, also refer to the specific implementation of step S603, and a main difference lies in that the first network element is the SMF. Details are not described herein again.

S806: The second network element sends, to the AF, the recommended data corresponding to the AF. Correspondingly, the AF receives, from the second network element, the recommended data corresponding to the AF.

S807: The AF determines, based on the recommended data corresponding to the AF, a first parameter corresponding to the AF.

In a possible implementation, the first data corresponding to the AF is a network operation indicator affected by the first parameter corresponding to the AF.

In this embodiment of this application, if the recommended data corresponding to the AF is the recommended server instance of the first application, the AF may select the server instance (that is, the first parameter) based on the recommended data corresponding to the AF.

S808: The second network element sends, to the PCF, the recommended data corresponding to the PCF. Correspondingly, the PCF receives, from the second network element, the recommended data corresponding to the PCF.

S809: The PCF determines, based on the recommended data corresponding to the PCF, a first parameter corresponding to the PCF.

In a possible implementation, the first data corresponding to the PCF is a network operation indicator affected by the first parameter corresponding to the PCF.

In this embodiment of this application, if the recommended data corresponding to the PCF is the recommended peak rate and the recommended average rate of the first application, the PCF may determine a QoS parameter (that is, the first parameter) of an application service packet based on the recommended data corresponding to the PCF, for example, determine an MFBR or an AMBR based on the recommended peak rate of the first application, and determine a GFBR based on the recommended average rate of the first application.

S810: The second network element sends, to the SMF, the recommended data corresponding to the SMF. Correspondingly, the SMF receives, from the second network element, the recommended data corresponding to the SMF.

It should be noted that an execution sequence of steps S806, S808, and S810 is not limited.

S811: The SMF determines, based on the recommended data corresponding to the SMF, a first parameter corresponding to the SMF.

In a possible implementation, the first data corresponding to the SMF is a network operation indicator affected by the first parameter corresponding to the SMF.

In this embodiment of this application, if the recommended data corresponding to the SMF is the recommended DNAI of the first application, the SMF may select a user plane path (that is, the first parameter) based on the recommended data corresponding to the SMF.

It should be noted that an execution sequence of steps S806 and S807, S808 and S809, and S810 and S811 is not limited. In addition, steps S804 to S811 are repeatedly performed at an interval of a preset time period (for example, every 30 seconds), until the AF, the PCF, and the SMF send recommendation service unsubscription messages to the second network element.

It can be learned that, based on the method described in FIG. 8A and FIG. 8B, a globally optimized data recommendation service can be provided without the need to understand service logic of each network element, thereby reducing workloads and helping improve adaptability and flexibility of the data recommendation service.

**II. To adjust a QoS parameter and avoid user plane congestion, a PCF requests recommended data from a recommendation service function.**

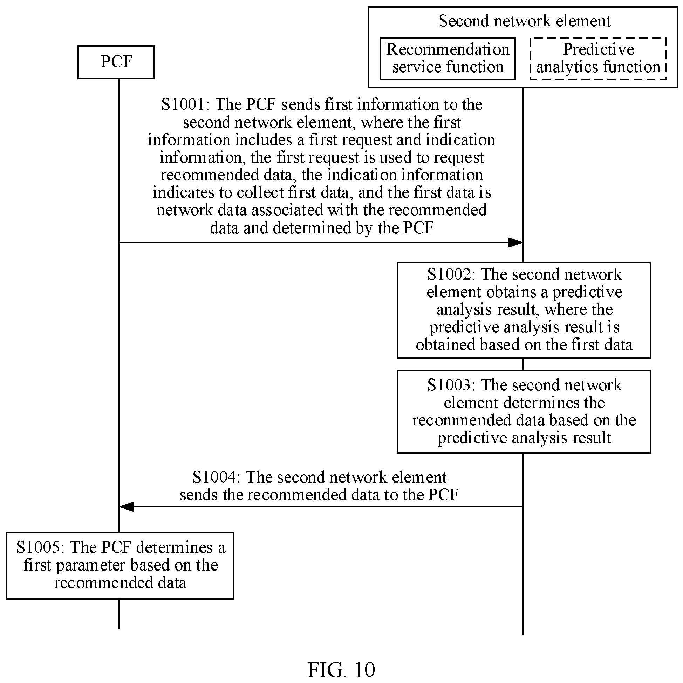

FIG. 10 is a schematic flowchart of another network data analysis method according to an embodiment of this application. As shown in FIG. 10, the network data analysis method includes the following steps S1001 to S1005. The method shown in FIG. 10 may be performed by a first network element and a second network element. Alternatively, the method shown in FIG. 10 may be performed by a chip in a first network element and a chip in a second network element. This is not limited in this embodiment of this application. FIG. 10 is described by using an example in which the method is performed by the first network element and the second network element. The first network element includes a PCF. The second network element may be a recommendation service function (which may be considered that the recommendation service function is an independent network element), or the second network element may include both a recommendation service function and a predictive analytics function (which may be considered that the recommendation service function and the predictive analytics function are centralized in a same network element, that is, the recommendation service function and the predictive analytics function are a same data analytics function, for example, an NWDAF network element that supports a recommendation service).

S1001: The PCF sends first information to the second network element, where the first information includes a first request and indication information, the first request is used to request the recommended data, the indication information indicates to collect first data, and the first data is network data associated with the recommended data and determined by the PCF. Correspondingly, the second network element receives the first information from the PCF.

In this embodiment of this application, the recommended data requested by using the first request is a recommended peak throughput and/or a recommended average throughput of a second application. The first data to be collected as indicated by the indication information is a user plane congestion level of the second application at a current time and/or a historical time. The indication information may alternatively be carried in the first request. This is not limited herein. Optionally, the first request includes an identifier of the second application.

In a possible implementation, the first information further includes an expected value of a target parameter. The target parameter is the user plane congestion level. It should be noted that, if the first information sent by the PCF does not carry the expected value of the target parameter, the second network element may alternatively obtain the expected value of the target parameter (that is, an optimization target) through pre-configuration or in another manner.

In a possible implementation, the method further includes: The PCF determines, based on service processing logic of the PCF, that the first data is associated with the recommended data.

In a possible implementation, the second network element further needs to determine an analysis type identifier, where the analysis type identifier herein indicates user plane congestion analysis. The second network element may determine the analysis type identifier in either of the following two manners. The following provides specific descriptions.

Manner 1: The first information further includes the analysis type identifier.

Manner 2: The second network element determines the analysis type identifier based on the target parameter and the first request.

For a specific implementation of step S1001, refer to the specific implementation of step S601, and a main difference lies in that the first network element is the PCF. Details are not described herein again.

S1002: The second network element obtains a predictive analysis result, where the predictive analysis result is obtained based on the first data.

The predictive analysis result includes a user plane congestion level at a next moment, a peak throughput of the second application at the next moment, and an average throughput of the second application at the next moment.

The second network element may be a recommendation service function (which may be considered that the recommendation service function is an independent network element), or the second network element may include both a recommendation service function and a predictive analytics function (which may be considered that the recommendation service function and the predictive analytics function are centralized in a same network element). The following separately describes, for the two cases, a specific implementation in which the second network element obtains the predictive analysis result.

Case 1: The second network element is the recommendation service function.

The specific implementation in which the second network element obtains the predictive analysis result may include the following steps s11 to s14, as shown in FIG. 7A.

s11: The recommendation service function sends a second request to the predictive analytics function, where the second request is used to request the predictive analysis result, and the second request includes the analysis type identifier and the indication information. Correspondingly, the predictive analytics function receives the second request from the recommendation service function.

Optionally, the method further includes: The recommendation service function determines analysis filtering information based on the first request, where the analysis filtering information indicates a network range corresponding to the predictive analysis result; and the second request further includes the analysis filtering information. The indication information may be carried in the first request. Specifically, the analysis filtering information may be determined based on the indication information, in the first request, for collecting the first data; or the analysis filtering information may be determined based on a data source, in the first request, of the first data.

s12: The predictive analytics function collects the first data and second data corresponding to the analysis type identifier, where the first data belongs to the second data, or the first data does not belong to the second data. The first data collected by the predictive analytics function is the user plane congestion level of the second application at the current time and/or the historical time, and the first data is collected through a UPF. The second data collected by the predictive analytics function includes fourth information collected from the UPF and/or an SMF, and the fourth information includes a peak throughput of the second application, an average throughput of the second application, the identifier of the second application, and location information of a terminal device at the current time and/or the historical time.

s13: The predictive analytics function determines the predictive analysis result based on the first data and the second data.

In a possible implementation, a specific implementation in which the predictive analytics function determines the predictive analysis result based on the first data and the second data may be: increasing, based on the indication information, a weight of the first data relative to data in the second data other than the first data, or increasing, based on the indication information, a weight of the first data relative to the second data; and determining the predictive analysis result based on the weight of the first data, a weight of the second data, the first data, and the second data.

s14: The predictive analytics function sends the predictive analysis result to the recommendation service function. Correspondingly, the recommendation service function receives the predictive analysis result from the predictive analytics function.

Case 2: The second network element includes both the recommendation service function and the predictive analytics function.

The specific implementation in which the second network element obtains the predictive analysis result may include the following steps s21 and s22, as shown in FIG. 7B.

s21: The second network element collects the first data and second data corresponding to the analysis type identifier, where the first data belongs to the second data, or the first data does not belong to the second data.

The first data collected by the predictive analytics function is the user plane congestion level of the second application at the current time and/or the historical time, and the first data is collected through a UPF. The second data collected by the predictive analytics function includes fourth information collected from the UPF and/or an SMF, and the fourth information includes a peak throughput of the second application, an average throughput of the second application, the identifier of the second application, and location information of a terminal device at the current time and/or the historical time.

s22: The second network element determines the predictive analysis result based on the first data and the second data.

In a possible implementation, determining the predictive analysis result based on the first data and the second data includes: increasing, based on the indication information, a weight of the first data relative to data in the second data other than the first data, or increasing, based on the indication information, a weight of the first data relative to the second data; and determining the predictive analysis result based on the weight of the first data, a weight of the second data, the first data, and the second data.

It should be noted that, for a specific implementation of step S1002, refer to the specific implementation of step S602, and a main difference lies in that the first network element is the PCF. Details are not described herein again.

S1003: The second network element determines the recommended data based on the predictive analysis result.

For a specific implementation of step S1003, refer to the specific implementation of step S603, and a main difference lies in that the first network element is the PCF. Details are not described herein again.

S1004: The second network element sends the recommended data to the PCF. Correspondingly, the PCF receives the recommended data from the second network element.

S1005: The PCF determines a first parameter based on the recommended data.

In a possible implementation, the first data is a network operation indicator affected by the first parameter.

In this embodiment of this application, if recommended data corresponding to the PCF is the recommended peak throughput and/or the recommended average throughput of the second application, the PCF may determine QoS parameters of main applications of several types based on the recommended data. For example, an MFBR is set based on the recommended peak throughput of the second application, and a GFBR is set based on the recommended average throughput of the second application. The PCF may further determine, based on the recommended data, a 5QI used for application data.

It should be noted that steps S1002 to S1005 are repeatedly performed at an interval of a preset time period (for example, every 30 seconds), until the PCF sends a recommendation service unsubscription message to the second network element.

It can be learned that, based on the method described in FIG. 10, a globally optimized data recommendation service can be provided without the need to understand service logic of each network element, thereby reducing workloads and helping improve adaptability and flexibility of the data recommendation service.

**III. To determine selection and distribution proportions for UPFs and prevent UPF load imbalance or overload, at least one SMF requests recommended data from a recommendation service function.**

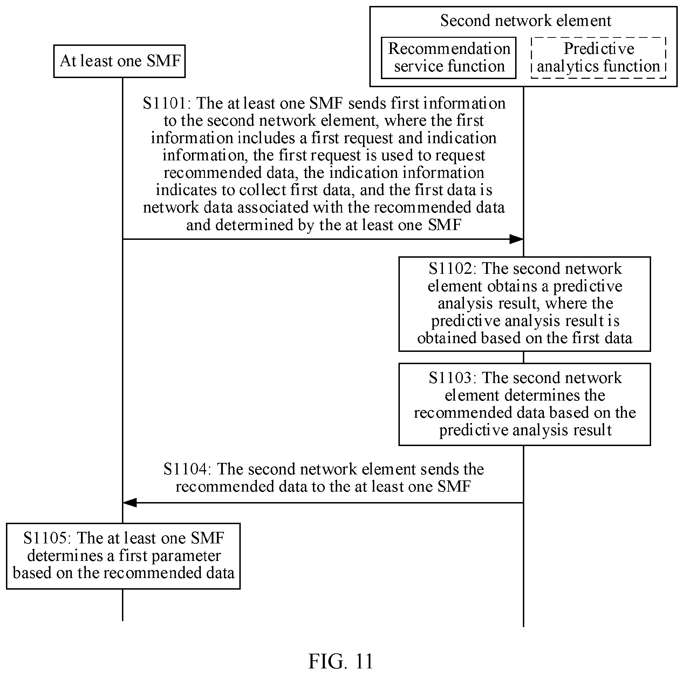

FIG. 11 is a schematic flowchart of another network data analysis method according to an embodiment of this application. As shown in FIG. 11, the network data analysis method includes the following steps S1101 to S1105. The method shown in FIG. 11 may be performed by a first network element and a second network element. Alternatively, the method shown in FIG. 11 may be performed by a chip in a first network element and a chip in a second network element. This is not limited in this embodiment of this application. FIG. 11 is described by using an example in which the method is performed by the first network element and the second network element. The first network element includes at least one SMF. The second network element includes a recommendation service function. For example, the second network element may be the recommendation service function (which may be considered that the recommendation service function is an independent network element), or the second network element may include both the recommendation service function and a predictive analytics function (which may be considered that the recommendation service function and the predictive analytics function are centralized in a same network element, that is, the recommendation service function and the predictive analytics function are a same data analytics function, for example, an NWDAF network element that supports a recommendation service).

S1101: The at least one SMF sends first information to the second network element, where the first information includes a first request and indication information, the first request is used to request recommended data, the indication information indicates to collect first data, and the first data is network data associated with the recommended data and determined by the at least one SMF. Correspondingly, the second network element receives the first information from the at least one SMF.

In this embodiment of this application, the recommended data requested by using the first request is a quantity of N4 interface sessions recommended to be established by the at least one SMF on a plurality of UPFs. The indication information indicates that the collected first data is a quantity of N4 interface sessions established by the at least one SMF on the plurality of UPFs at a current time and/or a historical time. The indication information may alternatively be carried in the first request. This is not limited herein.

In a possible implementation, the first information further includes an expected value of a target parameter. The target parameter is load levels of the plurality of UPFs. It should be noted that, if the first information sent by the SMF does not carry the expected value of the target parameter, the second network element may alternatively obtain the expected value of the target parameter (that is, an optimization target) through pre-configuration or in another manner.

In a possible implementation, the method further includes: The at least one SMF determines, based on service processing logic of the at least one SMF, that the first data is associated with the recommended data.

In a possible implementation, the second network element further needs to determine an analysis type identifier, where the analysis type identifier herein indicates network element load analysis. The second network element may determine the analysis type identifier in either of the following two manners. The following provides specific descriptions.

Manner 1: The first information further includes the analysis type identifier.

Manner 2: The second network element determines the analysis type identifier based on the target parameter and the first request.

For a specific implementation of step S1101, refer to the specific implementation of step S601, and a main difference lies in that the first network element is the at least one SMF. Details are not described herein again.

S1102: The second network element obtains a predictive analysis result, where the predictive analysis result is obtained based on the first data.

The predictive analysis result includes load levels of the plurality of UPFs at a next moment.

The second network element may be a recommendation service function (which may be considered that the recommendation service function is an independent network element), or the second network element may include both a recommendation service function and a predictive analytics function (which may be considered that the recommendation service function and the predictive analytics function are centralized in a same network element). The following separately describes, for the two cases, a specific implementation in which the second network element obtains the predictive analysis result.

Case 1: The second network element is the recommendation service function.

The specific implementation in which the second network element obtains the predictive analysis result may include the following steps s11 to s14, as shown in FIG. 7A.

s11: The recommendation service function sends a second request to the predictive analytics function, where the second request is used to request the predictive analysis result, and the second request includes the analysis type identifier and the indication information. Correspondingly, the predictive analytics function receives the second request from the recommendation service function.

Optionally, the method further includes: The recommendation service function determines analysis filtering information based on the first request, where the analysis filtering information indicates a network range corresponding to the predictive analysis result; and the second request further includes the analysis filtering information. The indication information may be carried in the first request. Specifically, the analysis filtering information may be determined based on the indication information, in the first request, for collecting the first data; or the analysis filtering information may be determined based on a data source, in the first request, of the first data.

s12: The predictive analytics function collects the first data and second data corresponding to the analysis type identifier, where the first data belongs to the second data, or the first data does not belong to the second data.

The first data collected by the predictive analytics function is the quantity of N4 interface sessions established by the at least one SMF on the plurality of UPFs at the current time and/or the historical time; and the first data is collected through the plurality of UPFs. The second data collected by the predictive analytics function includes fifth information collected from the plurality of UPFs, and the fifth information includes load level data of the plurality of UPFs at the current time and/or the historical time.

s13: The predictive analytics function determines the predictive analysis result based on the first data and the second data.

In a possible implementation, a specific implementation in which the predictive analytics function determines the predictive analysis result based on the first data and the second data may be: increasing, based on the indication information, a weight of the first data relative to data in the second data other than the first data, or increasing, based on the indication information, a weight of the first data relative to the second data; and determining the predictive analysis result based on the weight of the first data, a weight of the second data, the first data, and the second data.

s14: The predictive analytics function sends the predictive analysis result to the recommendation service function. Correspondingly, the recommendation service function receives the predictive analysis result from the predictive analytics function.

Case 2: The second network element includes both the recommendation service function and the predictive analytics function.

The specific implementation in which the second network element obtains the predictive analysis result may include the following steps s21 and s22, as shown in FIG. 7B.

s21: The second network element collects the first data and second data corresponding to the analysis type identifier, where the first data belongs to the second data, or the first data does not belong to the second data.

The first data collected by the predictive analytics function is the quantity of N4 interface sessions established by the at least one SMF on the plurality of UPFs at the current time and/or the historical time; and the first data is collected through the plurality of UPFs. The second data collected by the predictive analytics function includes fifth information collected from the plurality of UPFs, and the fifth information includes load level data of the plurality of UPFs at the current time and/or the historical time.

s22: The second network element determines the predictive analysis result based on the first data and the second data.

In a possible implementation, determining the predictive analysis result based on the first data and the second data includes: increasing, based on the indication information, a weight of the first data relative to data in the second data other than the first data, or increasing, based on the indication information, a weight of the first data relative to the second data; and determining the predictive analysis result based on the weight of the first data, a weight of the second data, the first data, and the second data.

It should be noted that, for a specific implementation of step S1102, refer to the specific implementation of step S602, and a main difference lies in that the first network element is the at least one SMF. Details are not described herein again.

S1103: The second network element determines the recommended data based on the predictive analysis result.

For a specific implementation of step S1103, refer to the specific implementation of step S603, and a main difference lies in that the first network element is the at least one SMF. Details are not described herein again.

S1104: The second network element sends the recommended data to the at least one SMF. Correspondingly, the PCF receives the recommended data from the second network element.

S1105: The at least one SMF determines a first parameter based on the recommended data.

In a possible implementation, the first data is a network operation indicator affected by the first parameter.

In this embodiment of this application, recommended data corresponding to the at least one SMF is the quantity of N4 interface sessions recommended to be established on the plurality of UPFs, and the at least one SMF may determine selection and distribution proportions (that is, first parameters) for the plurality of UPFs based on the recommended data.

It should be noted that steps S1102 to S1105 are repeatedly performed at an interval of a preset time period (for example, every 30 seconds), until the SMF sends a recommendation service unsubscription message to the second network element.

It can be learned that, based on the method described in FIG. 11, a globally optimized data recommendation service can be provided without the need to understand service logic of each network element, thereby reducing workloads and helping improve adaptability and flexibility of the data recommendation service.

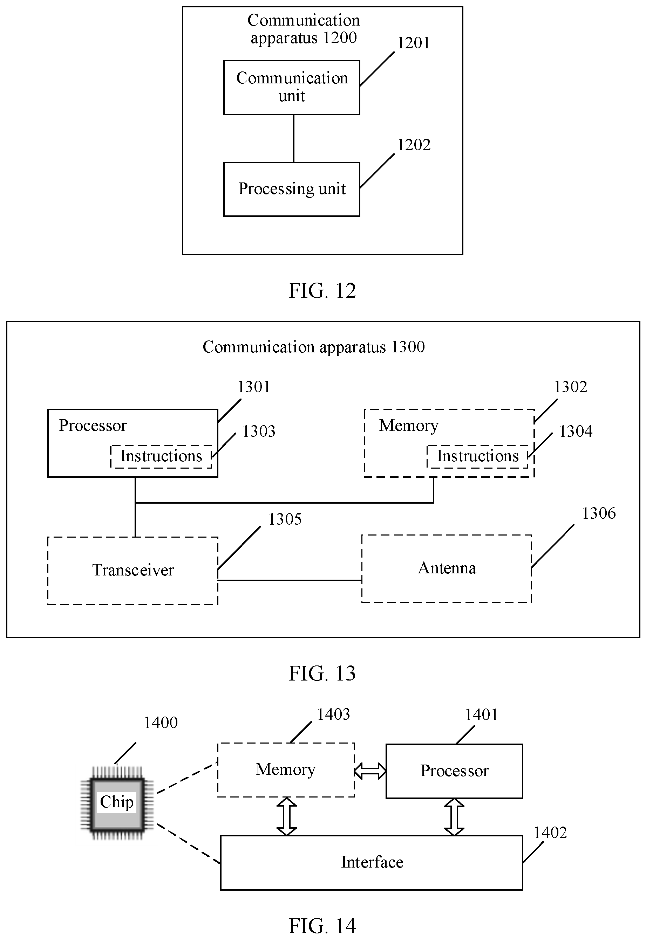

FIG. 12 is a diagram of a structure of a communication apparatus 1200 according to an embodiment of this application. The communication apparatus shown in FIG. 12 may be a recommendation service function, a predictive analytics function, or a first network element, may be an apparatus in the recommendation service function, the predictive analytics function, or the first network element, or may be an apparatus that can be used in conjunction with the recommendation service function, the predictive analytics function, or the first network element. Specifically, as shown in FIG. 12, a communication apparatus 1200 may include a communication unit 1201 and a processing unit 1202. The processing unit 1202 is configured to perform data processing. The communication unit 1201 is configured to perform communication. Optionally, a receiving unit and a sending unit are integrated in the communication unit 1201. The communication unit 1201 may also be referred to as a transceiver unit. Alternatively, the communication unit 1201 may be split into a receiving unit and a sending unit.

In an implementation, when the communication apparatus 1200 may be the recommendation service function, may be the apparatus in the recommendation service function, or may be the apparatus that can be used in conjunction with the recommendation service function,
the communication unit 1201 is configured to receive first information from a first network element, where the first information includes a first request and indication information, the first request is used to request recommended data, the indication information indicates to collect first data, and the first data is network data associated with the recommended data and determined by the first network element;
the processing unit 1202 is configured to obtain a predictive analysis result, where the predictive analysis result is obtained based on the first data;
the processing unit 1202 is configured to determine the recommended data based on the predictive analysis result; and
the communication unit 1201 is further configured to send the recommended data to the first network element.

In a possible implementation, the indication information further indicates a data source of the first data. Optionally, the data source of the first data indicates to collect the first data from one or more specified network elements.

In a possible implementation, the first information further includes an analysis type identifier; or the method further includes: determining the analysis type identifier based on a target parameter and the first request.

In a possible implementation, the analysis type identifier indicates any one of the following types: service experience analysis, user plane congestion analysis, or network element load analysis.

In a possible implementation, the target parameter includes any one of the following parameters: quality of experience, a user plane congestion level, and load levels of a plurality of UPFs.

In a possible implementation, when obtaining the predictive analysis result, the processing unit 1202 is specifically configured to: collect the first data and second data corresponding to the analysis type identifier, where the first data belongs to the second data, or the first data does not belong to the second data; and determine the predictive analysis result based on the first data and the second data.

In a possible implementation, when determining the predictive analysis result based on the first data and the second data, the processing unit 1202 is specifically configured to: increase, based on the indication information, a weight of the first data relative to data in the second data other than the first data, or increase, based on the indication information, a weight of the first data relative to the second data; and determine the predictive analysis result based on the weight of the first data, a weight of the second data, the first data, and the second data.

In a possible implementation, when the processing unit 1202 obtains the predictive analysis result, the communication unit 1201 is configured to send a second request to a predictive analytics function, where the second request is used to request the predictive analysis result, and the second request includes the analysis type identifier and the indication information. The communication unit 1201 is configured to receive the predictive analysis result from the predictive analytics function.

In a possible implementation, the processing unit 1202 is further configured to determine analysis filtering information based on the first request and the analysis type identifier, where the analysis filtering information indicates a network range corresponding to the predictive analysis result; and the second request further includes the analysis filtering information. Specifically, the processing unit 1202 determines the analysis filtering information based on the indication information, in the first request, for collecting the first data; or the processing unit 1202 determines the analysis filtering information based on the data source, in the first request, of the first data.

In a possible implementation, the analysis type identifier indicates service experience analysis; the first network element includes an AF, a PCF, and an SMF; and the first data includes a peak rate and an average rate of a first application at a current time and/or a historical time.

In a possible implementation, when the first network element is the AF, the recommended data includes a recommended server instance of the first application.

In a possible implementation, when the first network element is the PCF, the recommended data includes a recommended peak rate and a recommended average rate of the first application.

In a possible implementation, when the first network element is the SMF, the recommended data includes a recommended data network access identifier of the first application.

In a possible implementation, the analysis type identifier indicates user plane congestion analysis, and the first request includes an identifier of a second application; and the first network element includes a PCF, the first data includes a user plane congestion level of the second application at a current time and/or a historical time, and the recommended data includes a recommended peak throughput and/or a recommended average throughput of the second application.

In a possible implementation, the analysis type identifier indicates network element load analysis, and the first network element includes at least one SMF; and the first data includes a quantity of N4 interface sessions established by the at least one SMF on a plurality of UPFs at a current time and/or a historical time, and the recommended data includes a quantity of N4 interface sessions recommended to be established by the at least one SMF on the plurality of UPFs.

In a possible implementation, the first information further includes an expected value of a target parameter.

In a possible implementation, when determining the recommended data based on the predictive analysis result, the processing unit 1202 is specifically configured to: determine a deviation value based on the predictive analysis result and the expected value of the target parameter; adjust a model parameter of a first data optimizer in a direction to reduce the deviation value, to obtain a second data optimizer; and determine the recommended data by using the second data optimizer.

In an implementation, when the communication apparatus 1200 may be the predictive analytics function, may be the apparatus in the predictive analytics function, or may be the apparatus that can be used in conjunction with the predictive analytics function,
the communication unit 1201 is configured to receive a second request from a recommendation service function, where the second request is used to request a predictive analysis result, the second request includes an analysis type identifier and indication information, the indication information indicates to collect first data, and the first data is network data determined by a first network element and associated with recommended data output by the recommendation service function;
the processing unit 1202 is configured to collect first data and second data corresponding to an analysis type identifier, where the first data belongs to the second data, or the first data does not belong to the second data;
the processing unit 1202 is further configured to determine a predictive analysis result based on the first data and the second data; and
the communication unit 1201 is further configured to send the predictive analysis result to the recommendation service function.

In a possible implementation, the indication information further indicates a data source of the first data; and collecting the first data includes: collecting the first data from the data source. Optionally, the data source of the first data indicates to collect the first data from one or more specified network elements.

In a possible implementation, determining the predictive analysis result based on the first data and the second data includes: increasing, based on the indication information, a weight of the first data relative to data in the second data other than the first data, or increasing, based on the indication information, a weight of the first data relative to the second data; and determining the predictive analysis result based on the weight of the first data, a weight of the second data, the first data, and the second data.

In a possible implementation, the analysis type identifier indicates service experience analysis. The first network element includes an AF, a PCF, and an SMF. The first data includes a peak rate and an average rate of a first application at a current time and/or a historical time, and the first data is collected through a UPF. The second data includes second information collected from the AF and third information collected from the UPF and/or the SMF. The second information includes quality of experience of the first application, a server instance of the first application, and an identifier of the first application at a current time and/or a historical time. The third information includes a data network access identifier, a user data rate, a user packet delay, and a quality of service flow identifier corresponding to an application packet that are of the first application at the current time and/or the historical time.

In a possible implementation, the second request further includes analysis filtering information, where the analysis filtering information indicates a network range corresponding to the analysis prediction result.

In a possible implementation, the analysis type identifier indicates user plane congestion analysis. The first network element includes a PCF. The first data includes a user plane congestion level of a second application at a current time and/or a historical time, and the first data is collected through a UPF. The second data includes fourth information collected from the UPF and/or an SMF. The fourth information includes a peak throughput of the second application, an average throughput of the second application, an identifier of the second application, and location information of a terminal device at the current time and/or the historical time.

In a possible implementation, the analysis type identifier is network element load analysis, and the first network element includes at least one SMF. The first data includes a quantity of N4 interface sessions established by the at least one SMF on a plurality of UPFs at a current time and/or a historical time, and the first data is collected through the plurality of UPFs. The second data includes fifth information collected from the plurality of UPFs. The fifth information includes load level data of the plurality of UPFs at the current time and/or the historical time.

In an implementation, when the communication apparatus 1200 may be the first network element, may be the apparatus in the first network element, or may be the apparatus that can be used in conjunction with the first network element,
the communication unit 1201 is configured to send first information to a recommendation service function, where the first information includes a first request and indication information, the first request is used to request recommended data, the indication information indicates to collect first data, and the first data is network data associated with the recommended data and determined by the first network element;
the communication unit 1201 is further configured to receive the recommended data from the recommendation service function; and
the processing unit 1202 is configured to determine a first parameter based on the recommended data.

In a possible implementation, the processing unit 1202 is further configured to determine, based on service processing logic of the first network element, that the first data is associated with the recommended data.

In a possible implementation, the first data is a network operation indicator affected by the first parameter.

In a possible implementation, the first information further includes an analysis type identifier. Optionally, the analysis type identifier indicates any one of the following types: service experience analysis, user plane congestion analysis, or network element load analysis.

In a possible implementation, the processing unit 1202 is further configured to: determine the analysis type identifier based on the service processing logic of the first network element; and determine the first request and the indication information based on the analysis type identifier.

In a possible implementation, the analysis type identifier indicates service experience analysis; the first network element includes an AF, a PCF, and an SMF; and the first data includes a peak rate and an average rate of a first application at a current time and/or a historical time.

In a possible implementation, when the first network element is the AF, the recommended data is a recommended server instance of the first application, and the first parameter is a server instance selected by the first application.

In a possible implementation, when the first network element is the PCF, the recommended data includes a recommended peak rate and a recommended average rate of the first application. The first parameter includes a maximum flow bit rate or an aggregate maximum rate, and the first parameter further includes a guaranteed bit rate. Determining the first parameter based on the recommended data includes: determining the maximum flow bit rate or the aggregate maximum rate based on the recommended peak rate of the first application, and determining the guaranteed bit rate based on the recommended average rate of the first application.

In a possible implementation, when the first network element is the SMF, the recommended data is a recommended data network access identifier of the first application, and the first parameter is a user plane path selected by the first application.

In a possible implementation, the analysis type identifier indicates the user plane congestion analysis, and the first request includes an identifier of a second application; and the first network element includes a PCF, the first parameter is a session quality of service parameter, the first data includes a user plane congestion level of the second application at a current time and/or a historical time, and the recommended data includes a recommended peak throughput and/or a recommended average throughput of the second application.

In a possible implementation, the analysis type identifier indicates the network element load analysis; the first network element includes at least one SMF; the first parameter includes selection proportions of the at least one SMF for a plurality of UPFs; the first data includes a quantity of N4 interface sessions established by the at least one SMF on the plurality of UPFs at a current time and/or a historical time; and the recommended data includes a quantity of N4 interface sessions recommended to be established by the at least one SMF on the plurality of UPFs.

In a possible implementation, the indication information further indicates a data source of the first data. Optionally, the data source of the first data indicates to collect the first data from one or more specified network elements.

In a possible implementation, the first information further includes an expected value of a target parameter. Optionally, the target parameter includes any one of the following parameters: quality of experience, the user plane congestion level, and load levels of the plurality of UPFs.

FIG. 13 is a diagram of a structure of another communication apparatus. The communication apparatus 1300 may be the recommendation service function, the predictive analytics function, or the first network element in the foregoing method embodiments, or may be a chip, a chip system, a processor, or the like that supports the recommendation service function, the predictive analytics function, or the first network element to implement the foregoing methods. The communication apparatus may be configured to implement the methods described in the foregoing method embodiments. For details, refer to the descriptions in the foregoing method embodiments.

The communication apparatus 1300 may include one or more processors 1301. The processor 1301 may be a general-purpose processor, a dedicated processor, or the like. For example, the processor 1301 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1300 may include one or more memories 1302. The memory 1302 may store instructions 1304. The instructions may be run on the processor 1301, so that the communication apparatus 1300 performs the methods described in the foregoing method embodiments. Optionally, the memory 1302 may further store data. The processor 1301 and the memory 1302 may be separately disposed, or may be integrated together.

Optionally, the communication apparatus 1300 may further include a transceiver 1305 and an antenna 1306. The transceiver 1305 may be referred to as a transceiver unit, a transceiver machine, a transceiver circuit, or the like, and is configured to implement a transceiver function. The transceiver 1305 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. The processing unit 1202 shown in FIG. 12 may be the processor 1301. The communication unit 1201 may be the transceiver 1305.

In another possible design, the processor 1301 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1301 may store instructions 1303, and the instructions 1303 are run on the processor 1301, to enable the communication apparatus 1300 to perform the methods described in the foregoing method embodiments. The instructions 1303 may be fixed in the processor 1301. In this case, the processor 1301 may be implemented by using hardware.

In still another possible design, the communication apparatus 1300 may include a circuit, and the circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiment may be the recommendation service function, the predictive analytics function, or the first network element. However, a scope of the communication apparatus described in this embodiment of this application is not limited thereto, and the structure of the communication apparatus may not be limited by that in FIG. 13. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be a chip or a chip system, refer to a diagram of a structure of a chip shown in FIG. 14. A chip 1400 shown in FIG. 14 includes a processor 1401 and an interface 1402. Optionally, the chip may further include a memory 1403. There may be one or more processors 1401, and there may be a plurality of interfaces 1402.

When the chip is configured to implement a recommendation service function, a predictive analytics function, or a first network element in this embodiment of this application,
the interface 1402 is configured to receive or output a signal; and
the processor 1401 is configured to perform a data processing operation of the recommendation service function, the predictive analytics function, or the first network element.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features are combined with other features based on requirements. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be completed by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

It may be understood that the memory in this embodiment of this application may be a volatile memory or a nonvolatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in the specification includes but is not limited to these and any memory of another suitable type.

This application further provides a computer-readable medium. The storage medium stores a computer program or instructions. When the computer program or the instructions are executed by a communication apparatus, a function in any one of the foregoing method embodiments is implemented.

This application further provides a computer program product including instructions. When a computer reads and executes the computer program product, the computer is caused to implement a function in any one of the foregoing method embodiments.

This application provides a communication system. The communication system includes a recommendation service function and a first network element. The recommendation service function is configured to perform methods performed by the recommendation service function in the foregoing embodiments, and the first network element is configured to perform methods performed by the first network element in the foregoing embodiments.

This application provides a communication system. The communication system includes a recommendation service function, a predictive analytics function, and a first network element. The recommendation service function is configured to perform methods performed by the recommendation service function in the foregoing embodiments, the predictive analytics function is configured to perform methods performed by the predictive analytics function in the foregoing embodiments, and the first network element is configured to perform methods performed by the first network element in the foregoing embodiments.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network data analysis method, wherein the method is applied to a recommendation service function, and the method comprises:
receiving first information from a first network element, wherein the first information comprises a first request and indication information, the first request is used to request recommended data, the indication information indicates to collect first data, and the first data is network data associated with the recommended data and determined by the first network element;
obtaining a predictive analysis result, wherein the predictive analysis result is obtained based on the first data;
determining the recommended data based on the predictive analysis result; and
sending the recommended data to the first network element.

2. The method according to claim 1, wherein the indication information further indicates a data source of the first data.

3. The method according to claim 1 or 2, wherein the first information further comprises an analysis type identifier; or
the method further comprises:
determining the analysis type identifier based on a target parameter and the first request.

4. The method according to any one of claims 1 to 3, wherein the obtaining the predictive analysis result comprises:
collecting the first data and second data corresponding to the analysis type identifier, wherein the first data belongs to the second data, or the first data does not belong to the second data; and
determining the predictive analysis result based on the first data and the second data.

5. The method according to any one of claims 1 to 3, wherein the obtaining the predictive analysis result comprises:
sending a second request to a predictive analytics function, wherein the second request is used to request the predictive analysis result, and the second request comprises the analysis type identifier and the indication information; and
receiving the predictive analysis result from the predictive analytics function.

6. The method according to claim 5, wherein the method further comprises:
determining analysis filtering information based on the first request, wherein the analysis filtering information indicates a network range corresponding to the predictive analysis result; and
the second request further comprises the analysis filtering information.

7. The method according to any one of claims 3 to 6, wherein the analysis type identifier indicates service experience analysis; the first network element comprises an application function AF, a policy control function PCF, and a session management function SMF; and the first data comprises a peak rate and an average rate of a first application at a current time and/or a historical time.

8. The method according to claim 7, wherein when the first network element is the AF, the recommended data comprises a recommended server instance of the first application.

9. The method according to claim 7, wherein when the first network element is the PCF, the recommended data comprises a recommended peak rate and a recommended average rate of the first application.

10. The method according to claim 7, wherein when the first network element is the SMF, the recommended data comprises a recommended data network access identifier of the first application.

11. The method according to any one of claims 3 to 6, wherein the analysis type identifier indicates user plane congestion analysis, and the first request comprises an identifier of a second application; and
the first network element comprises a PCF, the first data comprises a user plane congestion level of the second application at a current time and/or a historical time, and the recommended data comprises a recommended peak throughput and/or a recommended average throughput of the second application.

12. The method according to any one of claims 3 to 6, wherein the analysis type identifier indicates network element load analysis, and the first network element comprises at least one SMF; and
the first data comprises a quantity of N4 interface sessions established by the at least one SMF on a plurality of UPFs at a current time and/or a historical time, and the recommended data comprises a quantity of N4 interface sessions recommended to be established by the at least one SMF on the plurality of UPFs.

13. The method according to any one of claims 1 to 12, wherein the first information further comprises an expected value of the target parameter.

14. The method according to claim 13, wherein the determining the recommended data based on the predictive analysis result comprises:
determining a deviation value based on the predictive analysis result and the expected value of the target parameter;
adjusting a model parameter of a first data optimizer in a direction to reduce the deviation value, to obtain a second data optimizer; and
determining the recommended data by using the second data optimizer.

15. A network data analysis method, wherein the method is applied to a predictive analytics function, and the method comprises:
receiving a second request from a recommendation service function, wherein the second request is used to request a predictive analysis result, the second request comprises an analysis type identifier and indication information, the indication information indicates to collect first data, and the first data is network data determined by a first network element and associated with recommended data output by the recommendation service function;
collecting the first data and second data corresponding to the analysis type identifier, wherein the first data belongs to the second data, or the first data does not belong to the second data;
determining the predictive analysis result based on the first data and the second data; and
sending the predictive analysis result to the recommendation service function.

16. The method according to claim 15, wherein the indication information further indicates a data source of the first data; and
the collecting the first data comprises:
collecting the first data from the data source.

17. The method according to claim 15 or 16, wherein the determining the predictive analysis result based on the first data and the second data comprises:
increasing, based on the indication information, a weight of the first data relative to data in the second data other than the first data, or increasing, based on the indication information, a weight of the first data relative to the second data; and
determining the predictive analysis result based on the weight of the first data, a weight of the second data, the first data, and the second data.

18. A network data analysis method, wherein the method is applied to a first network element, and the method comprises:
sending first information to a recommendation service function, wherein the first information comprises a first request and indication information, the first request is used to request recommended data, the indication information indicates to collect first data, and the first data is network data associated with the recommended data and determined by the first network element;
receiving the recommended data from the recommendation service function; and
determining a first parameter based on the recommended data.

19. The method according to claim 18, wherein the method further comprises:
determining, based on service processing logic of the first network element, that the first data is associated with the recommended data.

20. The method according to claim 18 or 19, wherein the first data is a network operation indicator affected by the first parameter.

21. The method according to any one of claims 18 to 20, wherein the first information further comprises an analysis type identifier.

22. The method according to claim 21, wherein the method further comprises:
determining the analysis type identifier based on the service processing logic of the first network element; and
determining the first request and the indication information based on the analysis type identifier.

23. The method according to any one of claims 18 to 22, wherein the indication information further indicates a data source of the first data.

24. A communication system, comprising a recommendation service function and a first network element, wherein the recommendation service function is configured to perform the method according to any one of claims 1 to 14, and the first network element is configured to perform the method according to any one of claims 18 to 23.

25. A communication system, comprising a recommendation service function, a predictive analytics function, and a first network element, wherein the recommendation service function is configured to perform the method according to any one of claims 1 to 14, the predictive analytics function is configured to perform the method according to any one of claims 15 to 17, and the first network element is configured to perform the method according to any one of claims 18 to 23.

26. A communication apparatus, comprising a unit configured to perform the method according to any one of claims 1 to 14 or comprising a unit configured to perform the method according to any one of claims 15 to 17, and comprising a unit configured to perform the method according to any one of claims 18 to 23.

27. A communication apparatus, comprising a processor and a memory, wherein the processor is coupled to the memory, and the processor is configured to implement the method according to any one of claims 1 to 14, the method according to any one of claims 15 to 17, or the method according to any one of claims 18 to 23.

28. A chip, comprising a processor and an interface, wherein the processor is coupled to the interface; and the interface is configured to receive or output a signal, and the processor is configured to execute code instructions, to perform the method according to any one of claims 1 to 14 or the method according to any one of claims 15 to 17, or the processor is configured to implement the method according to any one of claims 18 to 23.

29. A computer-readable storage medium, wherein the computer-readable storage medium stores computer-executable instructions, and when the computer-executable instructions are invoked by the computer, the computer is caused to perform the method according to any one of claims 1 to 14, the method according to any one of claims 15 to 17, or the method according to any one of claims 18 to 23.
